(19) Europäisches Patentamt
European Patent Office
Office européen des brevets

(11) **EP 3 107 727 B1**

(12) **EUROPEAN PATENT SPECIFICATION**

(45) Date of publication and mention
of the grant of the patent:
**24.06.2020 Bulletin 2020/26**

(51) Int Cl.:
***B32B 27/08*** (2006.01)      ***B32B 27/32*** (2006.01)

(21) Application number: **15713253.1**

(22) Date of filing: **19.02.2015**

(86) International application number:
**PCT/US2015/016607**

(87) International publication number:
**WO 2015/127071 (27.08.2015 Gazette 2015/34)**

(54) **MULTILAYER FILM, METHODS OF MANUFACTURE THEREOF AND ARTICLES COMPRISING THE SAME**

MEHRSCHICHTIGE FOLIE, VERFAHREN ZUR HERSTELLUNG DAVON UND ARTIKEL DAMIT

FILM MULTICOUCHE, SES PROCÉDÉS DE FABRICATION ET ARTICLES LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2014 PCT/CN2014/072265**

(43) Date of publication of application:
**28.12.2016 Bulletin 2016/52**

(73) Proprietor: **Dow Global Technologies LLC**
**Midland, MI 48674 (US)**

(72) Inventors:
• **HU, Yushan**
  **Pearland, Texas 77584 (US)**
• **LORENZO, Arnaldo**
  **Rosharon, Texas 77583 (US)**
• **PATEL, Rajen M.**
  **Lake Jackson, Texas 77566 (US)**
• **MARCHAND, Gary R.**
  **Gonzales, Louisiana 70737 (US)**
• **YUN, Xiaobing**
  **Beijing 100022 (CN)**

(74) Representative: **Beck Greener LLP**
**Fulwood House**
**12 Fulwood Place**
**London WC1V 6HR (GB)**

(56) References cited:
WO-A1-2013/003541      WO-A1-2013/003543
WO-A1-2014/043522      US-A1- 2013 183 465

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

This disclosure relates to multilayer film, methods of manufacture thereof and to articles comprising the same.

Cast polypropylene (CPP) films have been available for many years. Raw material prices and new packaging concepts have also had a big influence in promoting CPP films as a good alternative for the packaging industry that uses flexible films. CPP films are generally coextruded with propylene-based polymer with a lower melting range than homopolypropylene as a sealant layer, to facilitate a lower heat seal initiation temperature - e.g., random polypropylene copolymers, or terpolymers of propylene-ethylene-butene. However, the seal initiation temperature is high for random polypropylene copolymers or terpolymer-polypropylene.

On the other hand, linear low density polyethylene (LLDPE), particularly metallocene based polyethylenes, provides high seal performance. However, inherent incompatibility between the PP and LLDPE causes delamination between PP and LLDPE layers, resulting in poor adhesion and seal strength. It is therefore desirable to have packaging films that do not undergo delamination.

WO2013/003541 discloses a multilayer film structure comprising a) a top seal Layer A comprising a blend formulation of a linear low density polyethylene (LLDPE) comprising a polar ethylene copolymer in an amount of from 10 to 45 weight %, b) a bottom Layer C comprising a propylene-based polymer and c) a Layer B between Layer A and Layer C comprising a crystalline block copolymer composite (CBC) comprising i) an ethylene polymer (EP) comprising at least 93 mol % polymerized ethylene; ii) an alpha-olefin-based crystalline polymer (CAOP) such as a crystalline propylene polymer and iii) a block copolymer comprising (i) and (ii). The multilayer film structure has a thickness of 50-825 μm.

SUMMARY

Disclosed herein is a multilayer film comprising a first layer that comprises polyethylene and a second layer that comprises polypropylene; and a tie layer; wherein the tie layer comprises a crystalline block composite and wherein the tie layer is disposed between the first layer and the second layer; the first layer being disposed on a first surface of the tie layer; the second layer being disposed on a second surface of the tie layer; where the second surface is opposedly disposed to the first surface; where the crystalline block composite comprises a crystalline ethylene based polymer, a crystalline alpha-olefin based polymer and a block copolymer comprising a crystalline ethylene block and a crystalline alpha-olefin block, where the multilayer film has a total thickness of 20 to 130 micrometers. The crystalline ethylene based polymer is preferably present in an amount of at least 80 mole percent, based on the total number of moles of the crystalline ethylene based polymer.

Disclosed herein too is a method of manufacturing a multilayer film comprising coextruding a multilayer film comprising a first layer that comprises polyethylene and a second layer that comprises polypropylene; and a tie layer; where the tie layer comprises a crystalline block composite and where the tie layer is disposed between the first layer and the second layer; the first layer being disposed on a first surface of the tie layer; the second layer being disposed on a second surface of the tie layer; where the second surface is opposedly disposed to the first surface; where the crystalline block composite comprises a crystalline ethylene based polymer, a crystalline alpha-olefin based polymer and a block copolymer comprising a crystalline ethylene block and a crystalline alpha-olefin block; and blowing or casting the multilayer film; where the multilayer film has a total thickness of 20 to 130 micrometers.

BRIEF DESCRIPTION OF THE FIGURES

Figure 1 is a schematic of the multilayer film;
Figure 2 is a graphical plot showing the heat seal results for Example 1 and for Comparative Examples A, B and C.

DETAILED DESCRIPTION

"Composition" and like terms mean a mixture of two or more materials, such as a polymer which is blended with other polymers or which contains additives, fillers, or the like. Included in compositions are pre-reaction, reaction and post-reaction mixtures the latter of which will include reaction products and by-products as well as unreacted components of the reaction mixture and decomposition products, if any, formed from the one or more components of the pre- reaction or reaction mixture.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

"Polymer" means a compound prepared by polymerizing monomers, whether of the same or a different type. The generic term polymer thus embraces the term homopolymer, usually employed to refer to polymers prepared from only one type of monomer, and the term interpolymer as defined below. It also embraces all forms of interpolymers, e.g., random, block, etc. The terms "ethylene/a-olefin polymer" and "propylene/a-olefin polymer" are indicative of interpolymers as described below. It is noted that although a polymer is often referred to as being "made of" monomers, "based on" a specified monomer or monomer type, "containing" a specified monomer content, or the like, this is obviously understood to be referring to the polymerized remnant of the specified monomer and not to the unpolymerized species.

"Interpolymer" means a polymer prepared by the polymerization of at least two different monomers. This generic term includes copolymers, usually employed to refer to polymers prepared from two or more different monomers, and includes polymers prepared from more than two different monomers, e.g., terpolymers, tetrapolymers, etc.

"Polyolefin", "polyolefin polymer", "polyolefin resin" and like terms mean a polymer produced from a simple olefin (also called an alkene with the general formula $C_nH_{2n}$) as a monomer. Polyethylene is produced by polymerizing ethylene with or without one or more comonomers, polypropylene by polymerizing propylene with or without one or more comonomers, etc. Thus, polyolefins include interpolymers such as ethylene-$\alpha$-olefin copolymers, propylene-$\alpha$-olefin copolymers, etc.

"Melting Point" as used here (also referred to a melting peak in reference to the shape of the plotted DSC curve) is typically measured by the DSC (Differential Scanning Calorimetry) technique for measuring the melting points or peaks of polyolefins as described in USP 5,783,638. It should be noted that many blends comprising two or more polyolefins will have more than one melting point or peak; many individual polyolefins will comprise only one melting point or peak.

The term 'and/or" includes both "and" as well as "or". For example, the term A and/or B is construed to mean A, B or A and B.

Disclosed herein is a multilayer crystalline polypropylene film structure with an enhanced sealing property. The multilayer film structures comprise three layers: a first, outer or skin layer that comprises polyethylene; a tie layer that comprises a crystalline block composite; and a second layer that comprises polypropylene. The second layer is bonded to the first layer by the tie layer. Such multilayer films possess excellent seal properties (e.g., heat seal and hot tack) in comparison with the random copolymer or polypropylene terpolymers as a sealant.

The multilayered film displays good heat seal strength, low heat seal initiation temperature as well as broad hot tack window, which makes them useful in packaging food products. The multilayered film comprises at least 3 layers, one of which is a tie layer that comprises a crystalline block composite (CBC), optionally a polyolefin based elastomer; optionally a polypropylene and optionally a polyethylene. The tie layer is used to bond a first layer that comprises polyethylene to a second layer (that is opposedly disposed to the first layer) that comprises a polypropylene.

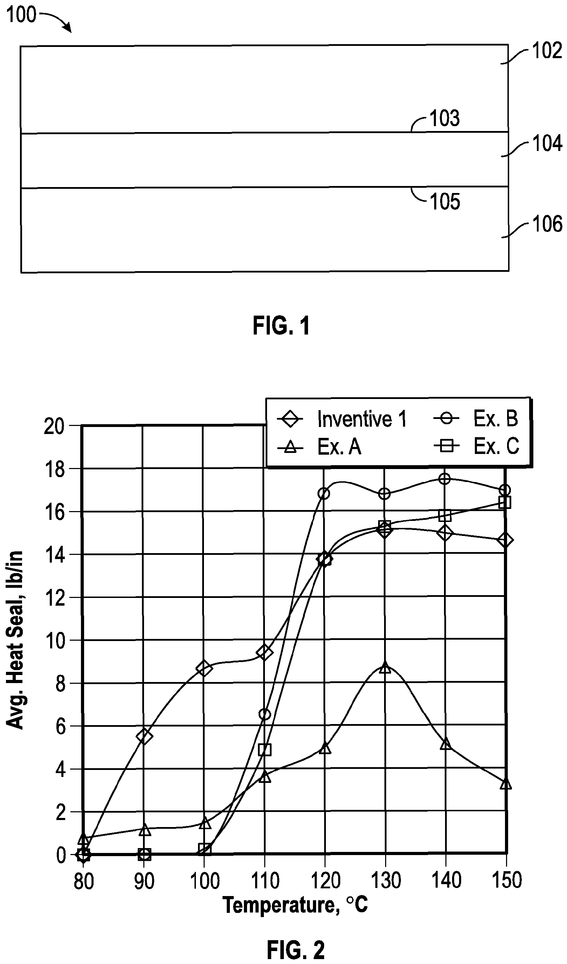

With reference now to the Figure 1, a multilayer film 100 comprises a first layer 102 (also called the outer layer or the skin layer), a tie layer 104 and a second layer 106. The tie layer 104 comprises a first surface 103 and a second surface 105 that are opposedly disposed to each other. The first layer 102 contacts the tie layer 104 at the first surface 103, while the second layer 106 (that is opposedly disposed to the first layer 102) contacts the tie layer 104 at the second surface 105.

As noted above, the tie layer 104 comprises a crystalline block composite (CBC), optionally a polyolefin based elastomer; optionally a polypropylene and optionally a polyethylene.

The term "crystalline block composite" (CBC) refers to polymers having three components: a crystalline ethylene based polymer (CEP) (also referred to herein as a soft polymer), a crystalline alpha-olefin based polymer (CAOP) (also referred to herein as a hard polymer), and a block copolymer comprising a crystalline ethylene block (CEB) and a crystalline alpha-olefin block (CAOB), wherein the CEB of the block copolymer is the same composition as the CEP in the block composite and the CAOB of the block copolymer is the same composition as the CAOP of the block composite. Additionally, the compositional split between the amount of CEP and CAOP will be essentially the same as that between the corresponding blocks in the block copolymer. When produced in a continuous process, the crystalline block composites desirably have a polydispersity index (PDI) from 1.7 to 15, specifically 1.8 to 10, specifically from 1.8 to 5, more specifically from 1.8 to 3.5. Such crystalline block composites are described in, for example, US Patent Application Publication Nos. 2011/0313106, 2011/0313107 and 2011/0313108, all published on December 22$^{nd}$, 2011, with respect to descriptions of the crystalline block composites, processes to make them and methods of analyzing them.

The crystalline ethylene polymer (CEP) (i.e., the soft block) comprises blocks of polymerized ethylene units in which any comonomer content is 10 mol% or less, specifically between 0 mol% and 10 mol%, more specifically between 0 mol% and 7 mol% and most specifically between 0 mol% and 5 mol%. The crystalline ethylene polymer has corresponding melting points that are specifically 75°C and above, specifically 90°C and above, and more specifically 100°C and above.

The crystalline alpha-olefin based polymer (CAOP) comprises highly crystalline blocks of polymerized alpha olefin units in which the monomer is present in an amount greater than 83 mol percent, specifically greater than 87 mol percent, more specifically greater than 90 mol percent, and specifically greater than 95 mol percent, based on the total weight of the crystalline alpha-olefin based polymer. In an exemplary embodiment, the polymerized alpha olefin unit is polypropylene. The comonomer content in the CAOPs is less than 17 mol percent, and specifically less than 13 mol percent, and more specifically less than 10 mol percent, and most specifically less than 5 mol%. CAOPs with propylene crystallinity have corresponding melting points that are 80°C and above, specifically 100°C and above, more specifically 115°C and above, and most specifically 120°C and above. In some embodiments, the CAOP comprise all or substantially all propylene units.

Examples of other alpha-olefin units (in addition to the propylene) that may be used in the CAOP contain 4 to 10 carbon atoms. Examples of these are 1-butene, 1-hexene, 4-methyl-1-pentene and 1-octene are the most preferred. Preferred diolefins are isoprene, butadiene, 1,4-pentadiene, 1,4-hexadiene, 1,5-hexadiene, 1,7-octadiene, 1, 9-decadiene, dicyclopentadiene, methylene-norbornene, 5-ethylidene-2-norbornene, or the like, or a combination comprising at least one of the foregoing alpha-olefin units.

The block copolymer of the crystalline block composite comprises a crystalline ethylene block (CEB) and a crystalline alpha olefin block (CAOB). In the crystalline ethylene block (CEB), ethylene monomer is present in an amount greater than 90 mol%, specifically greater than 93 mol percent, more specifically greater than 95 mol percent, and specifically greater than 90 mol percent, based on the total weight of the CEB. In an exemplary embodiment, the crystalline ethylene block (CEB) polymer is polyethylene. The polyethylene is present in an amount greater than 90 mol%, specifically greater than 93 mol percent, and more specifically greater than 95 mol percent, based on the total weight of the CEB. If any comonomer is present in in the CEB it is present in an amount of less than 10 mole%, specifically less than 5 mole%, based on the total number of moles of the CEB.

The CAOB comprises a polypropylene block that is copolymerized with other alpha-olefin units that contain 4 to 10 carbon atoms. Examples of the other alpha-olefin units are provided above. The polypropylene is present in the CAOB in an amount of greater than or equal to 83 mole%, specifically greater than 87 mole%, and more specifically greater than 90 mole%, based on the total number of moles of the CAOB. The comonomer content in the CAOBs is less than 17 mol percent, and specifically less than 13 mol percent, and more specifically less than 10 mol percent, based on the total number of moles in the CAOB. CAOBs with propylene crystallinity have corresponding melting points that are 80°C and above, specifically 100°C and above, more specifically 115°C and above, and most specifically 120°C and above. In some embodiments, the CAOB comprise all or substantially all propylene units.

In one embodiment, the crystalline block composite polymers comprise propylene, 1-butene or 4-methyl-1-pentene and one or more comonomers. Specifically, the block composites comprise in polymerized form propylene and ethylene and/or one or more $C_{4-20}$ $\alpha$-olefin comonomers, and/or one or more additional copolymerizable comonomers or they comprise 4-methyl-1-pentene and ethylene and/or one or more $C_{4-20}$ $\alpha$-olefin comonomers, or they comprise 1-butene and ethylene, propylene and/or one or more $C_5$-$C_{20}$ $\alpha$-olefin comonomers and/or one or more additional copolymerizable comonomers. Additional suitable comonomers are selected from diolefins, cyclic olefins, and cyclic diolefins, halogenated vinyl compounds, and vinylidene aromatic compounds. Preferably, the monomer is propylene and the comonomer is ethylene.

Comonomer content in the crystalline block composite polymers may be measured using any suitable technique, with techniques based on nuclear magnetic resonance (NMR) spectroscopy preferred.

The crystalline block composites have a melting point Tm greater than 100°C specifically greater than 120°C, and more specifically greater than 125°C. In an embodiment, the Tm is in the range of from 100°C to 250°C, more specifically from 120°C to 220°C and also specifically in the range of from 125°C to 220°C. Specifically the melt flow ratio (MFR) of the block composites and crystalline block composites is from 0.1 to 1000 dg/min, more specifically from 0.1 to 50 dg/min and more specifically from 0.1 to 30 dg/min.

In an embodiment, the crystalline block composites have a weight average molecular weight (Mw) from 10,000 to about 2,500,000 grams per mole (g/mole), specifically from 35000 to about 1,000,000 and more specifically from 50,000 to about 300,000, specifically from 50,000 to about 200,000 g/mole. The sum of the weight percents of soft copolymer, hard polymer and block copolymer equals 100%.

In an embodiment, the crystalline block composite polymers of the invention comprise from 0.5 to 95 wt % CEP, from 0.5 to 95 wt % CAOP and from 5 to 99 wt % block copolymer. More preferably, the crystalline block composite polymers comprise from 0.5 to 79 wt % CEP, from 0.5 to 79 wt % CAOP and from 20 to 99 wt % block copolymer and more preferably from 0.5 to 49 wt % CEP, from 0.5 to 49 wt % CAOP and from 50 to 99 wt % block copolymer. Weight percents are based on total weight of crystalline block composite. The sum of the weight percents of CEP, CAOP and block copolymer equals 100%.

Preferably, the block copolymers of the invention comprise from 5 to 95 weight percent crystalline ethylene blocks (CEB) and 95 to 5 wt percent crystalline alpha-olefin blocks (CAOB). They may comprise 10 wt% to 90 wt% CEB and 90 wt % to 10 wt% CAOB. More preferably, the block copolymers comprise 25 to 75 wt% CEB and 75 to 25 wt% CAOB, and even more preferably they comprise 30 to 70 wt % CEB and 70 to 30 wt % CAOB.

In some embodiments, the crystalline block composites have a Crystalline Block Composite Index (CBCI) that is greater than zero but less than about 0.4 or from 0.1 to 0.3. In other embodiments, CBCI is greater than 0.4 and up to 1.0. In some embodiments, the CBCI is 0.1 to 0.9, from about 0.1 to about 0.8, from about 0.1 to about 0.7 or from about 0.1 to about 0.6. Additionally, the CBCI can be in the range of from about 0.4 to about 0.7, from about 0.5 to about 0.7, or from about 0.6 to about 0.9. In some embodiments, CBCI is in the range of from about 0.3 to about 0.9, from about 0.3 to about 0.8, or from about 0.3 to about 0.7, from about 0.3 to about 0.6, from about 0.3 to about 0.5, or from about 0.3 to about 0.4. In other embodiments, CBCI is in the range of from about 0.4 to up to about 1.0, from about 0.5 to up to about 1.0, or from about 0.6 to up to about 1.0, from about 0.7 to up to about 1.0, from about 0.8 to up to about 1.0, or from about 0.9 to up to about 1.0.

The crystalline block composite is present in an amount of 30 to 100 weight percent (wt%), specifically 40 to 100 wt%, and more specifically 50 to 100 wt%, based on the total weight of the tie layer 104.

The tie layer 104 may also comprise in addition to the crystalline block composite (CBC) an optional elastomer. The optional elastomer can be an ethylene-$\alpha$-olefin copolymer (which is already detailed above), homogeneously branched ethylene-$\alpha$-olefin copolymer, a polyolefin elastomer (e.g., a propylene based elastomer), a vinyl aromatic block copolymer, or the like, or a combination comprising at least one of the foregoing elastomers.

The polyolefin elastomers may also comprise random or block propylene polymers (i.e., polypropylenes). The random polypropylene elastomer typically comprises 90 or more mole percent units derived from propylene. The remainder of the units in the propylene copolymer is derived from units of at least one $\alpha$-olefin.

The $\alpha$-olefin component of the propylene copolymer is preferably ethylene (considered an $\alpha$-olefin for purposes of this invention) or a $C_{4-20}$ linear, branched or cyclic $\alpha$-olefin. Examples of $C_{4-20}$ $\alpha$-olefins include 1-butene, 4-methyl-1-pentene, 1-hexene, 1-octene, 1-decene, 1-dodecene, 1-tetradecene, 1-hexadecene, and 1-octadecene. The $\alpha$-olefins also can contain a cyclic structure such as cyclohexane or cyclopentane, resulting in an $\alpha$-olefin such as 3-cyclohexyl-1-propene (allyl cyclohexane) and vinyl cyclohexane. Although not $\alpha$-olefins in the classical sense of the term, certain cyclic olefins, such as norbornene and related olefins, particularly 5-ethylidene-2-norbornene, are $\alpha$-olefins and can be used in place of some or all of the $\alpha$-olefins described above. Similarly, styrene and its related olefins (for example, $\alpha$-methyl styrene, and the like) are $\alpha$-olefins for purposes of this invention. Illustrative random propylene copolymers include but are not limited to propylene/ethylene, propylene/1-butene, propylene/1-hexene, propylene/1-octene, and the like. Illustrative terpolymers include ethylene/propylene/l-octene, ethylene/propylene/1-butene, and ethylene/propylene/diene monomer (EPDM).

In one embodiment the random polypropylene copolymer has a $T_m$ greater than 120°C, and/or a heat of fusion greater than 70 J/g (both measured by DSC) and preferably, but not necessarily, made *via* Ziegler-Natta catalysis.

In another embodiment, the polyolefin elastomer is a propylene-$\alpha$-olefin interpolymer and is characterized as having substantially isotactic propylene sequences. The propylene-$\alpha$-olefin interpolymers include propylene-based elastomers (PBE). "Substantially isotactic propylene sequences" means that the sequences have an isotactic triad (mm) measured by $^{13}$C NMR of greater than 0.85; in the alternative, greater than 0.90; in another alternative, greater than 0.92; and in another alternative, greater than 0.93. Isotactic triads are well-known in the art and are described in, for example, USP 5,504,172 and International Publication No. WO 00/01745, which refers to the isotactic sequence in terms of a triad unit in the copolymer molecular chain determined by $^{13}$C NMR spectra.

The propylene-$\alpha$-olefin copolymer comprises units derived from propylene and polymeric units derived from one or more $\alpha$-olefin comonomers. Exemplary comonomers utilized to manufacture the propylene-$\alpha$-olefin copolymer are $C_2$ and $C_4$ to $C_{10}$ $\alpha$-olefins; for example, $C_2$, $C_4$, $C_6$ and $C_8$ $\alpha$-olefins.

The propylene-$\alpha$-olefin interpolymer comprises 1 to 40 percent by weight of one or more alpha-olefin comonomers. The propylene-$\alpha$-olefin interpolymer may have a melt flow rate in the range of 0.1 to 500 grams per 10 minutes (g/10min), measured in accordance with ASTM D-1238 (at 230°C/2.16 Kg). The propylene-$\alpha$-olefin interpolymer has crystallinity in the range of from at least 1 percent by weight (a heat of fusion ($H_f$) of at least 2 Joules/gram (J/g)) to 30 percent by weight (a $H_f$ of less than 50 J/g). The propylene-$\alpha$-olefin interpolymer has a density of typically less than 0.895 g/cm$^3$. The propylene-$\alpha$-olefin interpolymer has a melting temperature ($T_m$) of less than 120°C and a heat of fusion ($H_f$) of less than 70 Joules per gram (J/g) as measured by differential scanning calorimetry (DSC) as described in USP 7,199,203. The propylene-$\alpha$-olefin interpolymer has a molecular weight distribution (MWD), defined as weight average molecular weight divided by number average molecular weight (Mw/Mn) of 3.5 or less; or 3.0 or less; or from 1.8 to 3.0.

Such propylene-$\alpha$-olefin interpolymers are further described in the USP 6,960,635 and 6,525,157. Such propylene-$\alpha$-olefin interpolymers are commercially available from The Dow Chemical Company, under the trade name VERSIFY™, or from ExxonMobil Chemical Company, under the trade name VISTAMAXX™.

The tie layer 104 may also optionally comprise homogeneously branched ethylene-$\alpha$-olefin copolymers. These copolymers are elastomeric and can be made with a single-site catalyst such as a metallocene catalyst or constrained geometry catalyst, and typically have a melting point of less than 105, specifically less than 90, more specifically less than 85, even more specifically less than 80 and still more specifically less than 75°C. The melting point is measured by differential scanning calorimetry (DSC) as described, for example, in USP 5,783,638. The $\alpha$-olefin is preferably a

$C_{3-20}$ linear, branched or cyclic α-olefin. Examples of $C_{3-20}$ α-olefins include propene, 1-butene, 4-methyl-1-pentene, 1-hexene, 1-octene, 1-decene, 1-dodecene, 1-tetradecene, 1-hexadecene, and 1-octadecene. The α-olefins can also contain a cyclic structure such as cyclohexane or cyclopentane, resulting in an α-olefin such as 3-cyclohexyl-1-propene (allyl cyclohexane) and vinyl cyclohexane.

Illustrative homogeneously branched ethylene-α-olefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethyl ene/butene/1-octene, and ethyl ene/butene/styrene. The copolymers can be random copolymers or block copolymers.

Examples of commercially available homogeneously branched ethylene-α-olefin interpolymers useful in the tie layer 104 includes homogeneously branched, linear ethylene-α-olefin copolymers (e.g. TAFMER® by Mitsui Petrochemicals Company Limited and EXACT® by Exxon Chemical Company), and the homogeneously branched, substantially linear ethylene-α-olefin polymers (e.g., AFFINITY™ and ENGAGE™ polyethylene available from the Dow Chemical Company). An exemplary ethylene-α-olefin copolymer that may be used in the tie layer 104 is AFFINITY™ EG 8100G, commercially available from the Dow Chemical Company.

The term vinyl aromatic block copolymer means a polymer having at least one block segment of a vinyl aromatic monomer in combination with at least one saturated or unsaturated elastomeric monomer segment, and more preferably not having a block of polymer that is neither elastomeric nor vinyl aromatic. Examples of vinyl aromatic block copolymers are "styrene block copolymer or styrenic block copolymer". The term "styrene block copolymer" or "styrenic block copolymer" means a polymer having at least one block segment of a styrenic monomer in combination with at least one saturated or unsaturated elastomer (rubber) monomer segment, and more preferably not having a block of polymer that is neither rubber or styrenic. Suitable styrene block copolymers having unsaturated rubber monomer units include styrene-butadiene (SB), styrene-isoprene (SI), styrene-butadiene-styrene (SBS), styrene-isoprene-styrene (SIS), α-methylstyrene-butadiene-α-methylstyrene, α-methylstyrene-isoprene-α-methylstyrene, and the like.

The term "styrene butadiene block copolymer" is used herein inclusive of SB, SBS and higher numbers of blocks of styrene (S) and butadiene (B). Similarly, the term "styrene isoprene block copolymer" is used inclusive of polymers having at least one block of styrene and one of isoprene (I). The structure of the styrene block copolymers can be of the linear or radial type, and of the diblock, triblock or higher block type. In some embodiments, the styrenic block copolymers having at least four different blocks or a pair of two repeating blocks, for example, repeating styrene/butadiene or styrene/ethylene propylene blocks, are desirable. Styrene block copolymers are commercially available from Dexco Polymers under the trademark VECTOR®, from KRATON Polymers under the trademark KRATON™, from Chevron Phillips Chemical Co. under the trademark SOLPRENE™ and K-Resin, and from BASF Corp. under the trade designation STYROLUX™. The styrene block copolymers are optionally used singly or in combinations of two or more.

The styrenic portion of the block copolymer is preferably a polymer or interpolymer of styrene or its analogs or homologs, including α-methyl styrene, and ring-substituted styrenes, particularly ring-methylated styrenes. Preferred styrenics are styrene and α-methyl styrene, with styrene being especially preferred.

The elastomer portion of the styrenic block copolymer is optionally either unsaturated or saturated. Block copolymers with unsaturated elastomer monomer units may comprise homopolymers of butadiene or isoprene and copolymers of one or both of these two dienes with a minor amount of styrenic monomer. When the monomer employed is butadiene, it is preferred that between about 35 and about 55 mole percent of the condensed butadiene units in the butadiene polymer block have a 1,2-configuration. When such a block is hydrogenated, the resulting product is, or resembles, a regular copolymer block of ethylene and 1-butene (EB). If the conjugated diene employed is isoprene, the resulting hydrogenated product is or resembles a regular copolymer block of ethylene and propylene (EP). Preferred block copolymers have unsaturated elastomer monomer units, more preferably including at least one segment of a styrenic unit and at least one segment of butadiene or isoprene, with SBS and SIS most preferred. Among these, SIS is preferred because it has been found to be particularly effective to compatibilize polypropylene with other polymers in the composition. Furthermore, it is preferred because of a lower tendency to crosslink forming gels during manufacture as compared to SBS. Styrene butadiene block copolymers are alternatively preferred when a cast tenter line is used in manufacturing a film when its higher clarity and lower haze are advantageous.

Elastomeric styrene block copolymers provide toughness and lower stiffness than would be obtained in the absence of the block copolymer. Elastomeric behavior is indicated by a property of tensile percent elongation at break of advantageously at least about 200, specifically at least about 220, more specifically at least about 240, most specifically at least about 260 and specifically at most about 2000, more specifically at most about 1700, most specifically at most about 1500 percent as measured by the procedures of ASTM D412 and/or ASTM D882. Industrially, most polymers of this type contain 10-80 wt% styrene. Within a specific type and morphology of polymer, as the styrene content increases the elastomeric nature of the block copolymer decreases.

The block copolymers desirably have a melt flow rate (MFR) of at least about 2, specifically at least about 4 grams per 10 minutes (g/10 min), specifically 20 g/10 min, and more specifically 30 g/10 min. Measure MFR according to ASTM method D1238 Condition G.

6

Preferred styrenic block copolymers include styrene-isoprene-styrene block copolymers ("SIS"), styrene-butadiene-styrene block copolymers ("SBS"), styrene-ethylenepropylene block copolymers ("SEP"), and hydrogenated styrenic block copolymer such as styrene-(ethylene butylene)-styrene block copolymers ("SEBS") (e.g., the SEBS commercially available from Kraton Polymers LLC under the trade designation KRATON™ 1657). Preferably, the styrenic block copolymer used in the tie layer is SBS.

In one embodiment, the styrene butadiene block copolymer has a radial or star block configuration with polybutadiene at the core and polystyrene at the tips of the arms. Such polymers are referred to herein as star styrene butadiene block copolymers and are within the skill in the art and commercially available from Chevron Phillips Chemical Co. under the trade designation K-Resin. These polymers contain about 27% butadiene or more in a star-block form and often feature a bimodal molecular weight distribution of polystyrene. The inner polybutadiene segments are of about the same molecular weight while the outer polystyrene segments are of different molecular weight. This feature facilitates control of polybutadiene segment thickness, to obtain improved clarity. For high clarity, the polybutadiene segment thickness is preferably about one-tenth of the wavelength of visible spectrum or less.

The ethylene-$\alpha$-olefin copolymer has been described above as has the polyethylene and will not be detailed again. The polypropylene will be detailed below with reference to the layer 106.

If the elastomer is used, it is present in amounts of up to 50 wt%, specifically 5 to 40 wt%, based on the total weight of the tie layer 104.

The tie layer 104 may also optionally comprise polyethylene or polypropylene. The optional polyethylene is selected from ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), or combinations thereof.

The optional polyethylene and/or the optional polypropylene are present in the tie layer 104 in an amount of up to 50 wt%, specifically 10 to 30 wt%, based on the total weight of the tie layer 104.

The tie layer 104 has a thickness of 1 to 20%, specifically 2 to 15%, and more specifically 3 to 10% of the total thickness of the multilayer film.

The first layer 102 (also called the outer layer or skin layer) comprises polyethylene. The polyethylene is selected from ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), or combinations thereof.

In an exemplary embodiment, the first layer 102 comprises linear low density polyethylene (LLDPE). LLDPE is a copolymer (also referred to as an interpolymer) of ethylene and an $\alpha$-olefin having 3 to 12 carbon atoms, specifically 4 to 8 carbon atoms (e.g., propene, 1 butene, 4-methyl-1-pentene, 1-hexene, 1 octene, 1-decene, and the like), that has sufficient $\alpha$-olefin content to reduce the density of the copolymer to that of LDPE. The term "LLDPE", includes both -resin manufactured using the traditional Ziegler-Natta catalyst systems as well as single-site catalysts such as metallocenes (sometimes referred to as "m-LLDPE"). LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the processes disclosed in U.S. Patent No. 4,076,698; and/or blends thereof (such as those disclosed in US 3,914,342 or US 5,854,045). The LLDPE can be made by any process such as gas phase polymerization, solution phase polymerization, slurry polymerization or combinations thereof.

In one embodiment, the LLDPE used in the first layer 102 comprises the linear low density polyethylene having a melt index $I_2$ of 0.25 to 20 g/10 minutes when measured as per ASTM D 1238 at 190°C and 2.16 kg, and a density of less than 0.930 grams per square centimeter (measured as per ASTM D 792). An exemplary LLDPE for use in the outer layer 102 is ELITE™ AT 6111, which is an ethylene-octene copolymer with melt index of 3.7 g/10 min (measured as per ASTM D1238 at 190°C and 2.16 kg), density 0.912 g/cc (measured as per ASTM D 792), and commercially available from The Dow Chemical Company. Other exemplary LLDPE's that can be used in the outer layers 102 and 110 are linear ethylene-based polymers such as DOWLEX™ Polyethylene Resins, ELITE™ and ELITE™ AT brand enhanced polyethylene resin, all available from The Dow Chemical Company, and Exceed™ metallocene polyethylenes, available from ExxonMobil Chemical Company.

Another exemplary polyethylene for use in the outer layers is homogeneously branched ethylene-$\alpha$-olefin copolymers. These copolymers can be made with a single-site catalyst such as a metallocene catalyst or constrained geometry catalyst, and typically have a melting point of less than 105, specifically less than 90, more specifically less than 85, even more specifically less than 80 and still more specifically less than 75°C. The melting point is measured by differential scanning calorimetry (DSC) as described, for example, in USP 5,783,638. The $\alpha$-olefin is preferably a $C_{3-20}$ linear, branched or cyclic $\alpha$-olefin. Examples of $C_{3-20}$ $\alpha$-olefins include propene, 1-butene, 4-methyl-1-pentene, 1-hexene, 1-octene, 1-decene, 1-dodecene, 1-tetradecene, 1-hexadecene, and 1-octadecene. The $\alpha$-olefins can also contain a cyclic structure such as cyclohexane or cyclopentane, resulting in an $\alpha$-olefin such as 3-cyclohexyl-1-propene (allyl cyclohexane) and vinyl cyclohexane.

Illustrative homogeneously branched ethyl ene-α-olefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethyl ene/butene/1-octene, and ethyl ene/butene/styrene. The copolymers can be random copolymers or block copolymers.

Examples of commercially available homogeneously branched ethylene-α-olefin interpolymers useful in the outer layers 102 include homogeneously branched, linear ethylene-α-olefin copolymers (e.g. TAFMER® by Mitsui Petrochemicals Company Limited and EXACT® by Exxon Chemical Company), and the homogeneously branched, substantially linear ethylene-α-olefin polymers (e.g., AFFINITY™ and ENGAGE™ polyethylene available from the Dow Chemical Company). Any of these interpolymers or their combinations can also be used in the first layer 102. An exemplary interpolymer is AFFINITY PL1850G commercially available from The Dow Chemical Company.

Propylene-α-olefin interpolymers can also be used as the first layer 102 (sealant layer) with preferred melting points 90 to 145 °C.

The first layer 102 has a thickness of 5 to 30 %, specifically 10 to 30 %, specifically 15 to 25%, of the total thickness of the multilayer film.

The second layer 106 (also called the base layer 106) comprises polypropylene. The polypropylene is selected from random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), or a combination comprising at least one of the foregoing polypropylenes.

The polypropylene is generally in the isotactic form of homopolymer polypropylene, although other forms of polypropylene can also be used (e.g., syndiotactic or atactic). Polypropylene impact copolymers (e.g., those wherein a secondary copolymerization step reacting ethylene with the propylene is employed) and random copolymers (also reactor modified and usually containing 1.5-7% ethylene copolymerized with the propylene), however, can also be used in the layer 106. A complete discussion of various polypropylene polymers is contained in Modern Plastics Encyclopedia/89, mid October 1988 Issue, Volume 65, Number 11, pp. 86-92. The molecular weight and hence the melt flow rate of the polypropylene for use in the present invention varies depending upon the application. The melt flow rate for the polypropylene useful herein is generally from about 0.1 grams/10 minutes (g/10 min, measured as per ASTM D1238 at 230°C and 2.16 kg) to about 100 g/10 min specifically 0.5 g/10 min to about 80 g/10 min, and specifically 4 g/10 min to about 70 g/10 min. The propylene polymer can be a polypropylene homopolymer, or it can be a random copolymer or even an impact copolymer (which already contains a rubber phase). The polypropylene may be produced by using Ziegler-Natta ot metallocene catalysts. Examples of such propylene polymers include ExxonMobil™ hPP 4712E1 (made by Exxon Mobil), hPP H03G-05 (made by Ineos) and, MOPLEN and PROFAX (made by Lyondell).

The second layer 106 may contain polypropylene in an amount of 40 to 100 wt%, specifically 60 to 100 wt%, based on the total weight of the second layer 106.

The second layer 106 may optionally contain an elastomer in an amount of up to 40 wt%, specifically 10 to 35 wt%, based on the total weight of the second layer. The elastomer can be an ethylene-α-olefin copolymer (which is already detailed above), a polyolefin elastomer (e.g., a propylene based elastomer), a vinyl aromatic block copolymer, or a combination thereof (as already detailed above). The second layer 106 may also contain polyethylene in an amount of up to 40 wt%, specifically 10 to 35 wt%, based on the total weight of the second layer. The polyethylenes have been described above, and will not be detailed here again.

The second layer 106 (i.e., the base layer) has a thickness of 50 to 94%, specifically 65 to 90%, and more specifically 70 to 85%, based on the total thickness of the multilayered film 100. In an exemplary embodiment, the second layer has a thickness that is at least 66% of the total thickness of the multilayered film. In another embodiment, the second layer 106 may also be multilayered.

The multilayered film 100 has a total thickness of 10 to 250 micrometers, specifically 20 to 130 micrometers, and more specifically 20 to 75 micrometers.

Each layer of the multilayer film 100 may contain other additives such as waxes, antioxidants, antiozonants, mold release agents, biocides, thermal stabilizers, pigments, dyes, infrared absorption agents, ultraviolet stabilizers, or the like, or a combination comprising at least one of the foregoing additives.

One of more layers of the multilayer film can optionally comprise a wax that may reduce the melt viscosity in addition to reducing costs. Non-limiting examples of suitable waxes include petroleum waxes, polyolefin waxes such as low molecular weight polyethylene or polypropylene, synthetic waxes, paraffin and microcrystalline waxes having melting points from about 55 to about 110°C, Fischer-Tropsch waxes, or a combination comprising at least one of the foregoing waxes. In some embodiments, the wax is a low molecular weight polyethylene homopolymer or interpolymer having a number average molecular weight of about 400 to about 6,000 g/mole.

In further embodiments, each of the layers of the multilayer film can optionally comprise an antioxidant or a stabilizer. Non-limiting examples of suitable antioxidants include amine-based antioxidants such as alkyl diphenylamines, phenyl-α-naphthylamine, alkyl or aralkyl substituted phenyl-α-naphthylamine, alkylated p-phenylene diamines, tetramethyl-diaminodiphenylamine and the like; and hindered phenol compounds such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate))]methane (e.g., IRGANOXTM 1010, from Ciba Geigy, New York); octadecyl-3,5-di-t-butyl-4-hydroxycinnamate (e.g., IRGANOXTM 1076, commercially available from Ciba Geigy) and combinations thereof. Where used, the amount of the antioxidant in the composition can be up to about 1 wt%, specifically 0.05 to 0.75 wt%, and specifically 0.1 to 0.5 wt%, based on the total weight of any particular layer.

In further embodiments, the compositions disclosed herein optionally can comprise an UV stabilizer that may prevent or reduce the degradation of the compositions by UV radiation. Non-limiting examples of suitable UV stabilizers include benzophenones, benzotriazoles, aryl esters, oxanilides, acrylic esters, formamidine carbon black, hindered amines, nickel quenchers, hindered amines, phenolic antioxidants, metallic salts, zinc compounds, or the like, or a combination comprising at least one of the foregoing UV stabilizers. Where used, the amount of the UV stabilizer in any particular layer can be from about greater than 0 to about 1 wt%, specifically 0.05 to 0.75 wt%, and specifically 0.1 to 0.5 wt%, based on the total weight of a particular layer.

In further embodiments, the compositions disclosed herein optionally can comprise a colorant or pigment. Any colorant or pigment known to a person of ordinary skill in the art may be used in the adhesion composition disclosed herein. Non-limiting examples of suitable colorants or pigments include inorganic pigments such as titanium dioxide and carbon black, phthalocyanine pigments, and other organic pigments such as IRGAZIN®, CROMOPHTAL®, MONASTRAL®, CINQUASIA®, IRGALITE®, ORASOL®, all of which are available from Ciba Specialty Chemicals, Tarrytown, NY. Where used, the amount of the colorant or pigment in any particular layer can be present in an amount of up to 10 wt%, specifically 0.1 to 5 wt%, and more specifically 0.5 to 2 wt%, based on the total weight of any particular layer of the multilayered film.

In further embodiments, the compositions disclosed herein optionally can comprise polymeric processing aids (such as Dynamar™ 5911 from Dyneon Corporation), antiblocks and slip additives. These additives may advantageously be used to reduce stickiness and modify coefficient of friction to desired levels for ease of handling.

In one embodiment, in one method of manufacturing the film 100, the respective compositions for each of the layers 102, 104, and 106 of the multilayered film 100 is fed to a separate device in which it is subjected to shear, extensional and elongational forces. The device that exerts the foregoing forces on the composition can be conducted in an extruder (single screw or twin screw), a Henschel mixer, a Waring blender, a Buss Kneader, a Banbury, a roll mill (two or more rolls), high shear impeller disperser, dough mixer, or the like. The ingredients for any layer in the multilayered film may be dry mixed or solution blended in either a Henschel mixer, a Waring blender, a high shear impeller disperser, or the like, prior to being extruded.

In an exemplary embodiment, the composition for each of the respective layers are fed to separate extruders. The composition for the first layer 102 is fed to a first extruder, the composition for the tie layer 104 is fed to a second extruder, and the composition for the third layer 106 is fed to a third extruder. The compositions from the respective extruders are fed to a single die and are coextruded to form the multilayered film. The coextruded film is then blown to form a multilayered film of the desired thickness. In an embodiment, the multilayered film after being coextruded is laminated in a roll mill having two or more rolls.

In another embodiment, in another method of manufacturing the multilayered film, each layer may be extruded separately, and the extruded layers may then be formed into a laminate (such as extrusion lamination, thermal lamination, compression moldng, adhesive lamination). The compression molding or lamination can be conducted in a roll mill, or in a compression molding press or a laminator.

In one embodiment, the multilayered film may be cast, i.e., extruded from the extruder into a stream of fluid that quenches the film. In an embodiment, each layer of the multilayer film may be cast, and the respective films are then laminated together in a roll mill, if desired.

As detailed above, a plurality of multilayered films may be laminated together to form a single multilayered film. When two or more multilayered films are laminated together, at least one of the common layers may be omitted if desired. For example, if two multilayered films are laminated together, then at least one of the second layers 106 may be omitted. Thus while a single multilayered film contains 3 layers, two multilayered films laminated together will contain 5 layers, and three multilayered films will contain 7 layers.

Additionally, the multilayered film 100 can be adhesive laminated to the surface of the press sheet or other substrate, typically polypropylene, polyester, or nylon. Typically the bonding agent, dissolved into a liquid (water or a solvent), is applied to one of the webs, before being evaporated in the drying oven. The adhesive coated web is laminated to the other under strong pressure and using heated rollers, which improves the bond strength of the laminate.

The multilayered films disclosed herein exhibit a high heat seal strength, preferably greater than 3.5 lb/in (9.2 N/15mm) for a total film thickness of 30 μm, 5.7 lb/in (15 N/15mm) for a total film thickness of 50 μm and 10 lb/in (26.3 N/15mm) for a total film thickness of 125μm. The seal strength of laminated film is preferably greater than 8 lb/in (21.0 N/15mm), and more preferably greater than 10 lb/in (26.3 N/15mm). The preferred films of the present invention also exhibit low heat initiation temperature, such as less than or equal to 110°C, and more preferably less than or equal to 100°C. Additionally, the preferred films of the present invention possess good optical clarity and mechanical properties. Accordingly, the preferred films of the present invention can meet the heat seal and other performance requirements for food packaging market.

The multilayered films disclosed herein and the method of manufacturing the films are exemplified in the following examples.

EXAMPLE

This example was conducted to demonstrate the method of manufacturing the multilayer films disclosed herein as well as the properties of these films. A variety of different films were manufactured and tested to determine their properties. The compositions for these materials are shown in the Table 1. Tables 2 and 3 show the different properties for the crystalline block composites. Table 3 shows the crystalline block composite Index estimation, while Table 2 shows physical properties for the crystalline block composite.

Table 1

| Material | MI (190°C, g/10min) | MFR (230°C, g/10min) | Density (g/cm3) | Supplier |
|---|---|---|---|---|
| CBC 1 | | 6.7 | 0.902 | 50/50 EP/iPP, 90wt% C2 in EP |
| CBC 2 | | 10.1 | 0.906 | 50/50 EP/iPP, 90wt% C2 in EP |
| CBC 3 | | 6.6 | 0.895 | 40/60 EP/iPP, 90wt% C2 in EP, 9% C2 in iPP |
| hPP DX5E66 (PP1) | | 8.7 | 0.9 | Braskem |
| hPP D115 (PP2) | | 11 | 0.9 | Braskem |
| ELITE™ AT 6111(PE1) | 3.7 | | 0.912 | The Dow Chemical Company |
| ELITE™ 5230 (PE2) | 4.0 | | 0.916 | The Dow Chemical Company |
| DOWLEX™ 2247 (PE3) | 2.3 | | 0.917 | The Dow Chemical Company |
| VERSIFY™ 3200 (PBE1) | | 8 | 0.878 | The Dow Chemical Company |
| Cosmoplene FL7641L (ter-PP) | | 7 | 0.9 | The Polyolefin Company (TPC), Singapore |

Referring to Table 1, CBC 1, CBC 2, and CBC3 are each prepared using two continuous stirred tank reactors (CSTR) connected in series. The first reactor is approximately 12 gallons (45 litres) in volume while the second reactor is approximately 26 gallons (98 litres). Each reactor is hydraulically full and set to operate at steady state conditions. Monomers, Solvent, Catalyst, Cocatalyst-1, Cocatalyst-2, and CSA-1 are flowed to the first reactor according to the process conditions outlined in Table 1. Then, the first reactor contents, as described in Table 1A, below, are flowed to a second reactor in series. Additional Catalyst, Cocatalyst-1, and Cocatalyst-2 are added to the second reactor. Tables 2 and 3, below, shows the analytical characteristics of CBC 1, CBC 2, and CBC 3.

The process conditions for producing CBC 1, CBC 2, and CBC3 are shown in Table 2. With repect to Table 1A, Catalyst-1 ([[rel-2',2'''-[(1R,2R)-1,2-cylcohexanediylbis(methyleneoxy-κO)] bis[3-(9H-carbazol-9-yl)-5-methyl[1,1'-biphenyl]-2-olato-κO]](2-)]dimethyl-hafnium) and Cocatalyst-1, a mixture of methyldi($C_{14-18}$ alkyl)ammonium salts of tetrakis(pentafluorophenyl)borate, prepared by reaction of a long chain trialkylamine (Armeen™ M2HT, available from Akzo-Nobel, Inc.), HCl and Li[B($C_6F_5$)$_4$], substantially as disclosed in USP 5,919,983, Ex. 2., are purchased from Boulder Scientific and used without further purification.

CSA-1 (diethylzinc or DEZ) and cocatalyst-2 (modified methylalumoxane (MMAO)) are purchased from Akzo Nobel and used without further purification. The Solvent for the polymerization reaction is a hydrocarbon mixture (ISOPAR®E) obtainable from ExxonMobil Chemical Company and purified through beds of 13-X molecular sieves prior to use.

Table 2

| Material | CBC1 | | CBC2 | | CBC3 | |
|---|---|---|---|---|---|---|
| Reactor | 1st Reactor | 2nd Reactor | 1st Reactor | 2nd Reactor | 1st Reactor | 2nd Reactor |
| Reactor Control Temp.(°C) | 140 | 129 | 153 | 130 | 152 | 130 |
| Solvent Feed (lb/hr) | 241 | 245 | 343 | 101 | 273 | 141 |
| Propylene Feed (lb/hr) | 5.5 | 48.6 | 3.4 | 44.1 | 2.7 | 48.4 |
| Ethylene Feed (lb/hr) | 46.0 | 0 | 41.7 | 0 | 33.2 | 4.1 |
| Hydrogen Feed SCCM) | 9.7 | 49.8 | 0 | 0 | 0 | 0 |
| Reactor Propylene Conc. (g/L) | 3.2 | 1.46 | 0 | 2.42 | 0.25 | 2.74 |
| Catalyst Efficiency (gPoly/gM) *1.0E6 | 1.39 | 0.04 | 0.247 | 0.138 | 0.27 | 0.32 |
| Catalyst Flow (lb/hr) | 0.24 | 2.25 | 0.31 | 0.53 | 0.66 | 0.79 |
| Catalyst Conc. (ppm) | 150 | 500 | 600 | 600 | 200 | 200 |
| Cocatalyst-1 Flow (lb/hr) | 0.24 | 1.41 | 0.62 | 0.53 | 0.94 | 1.12 |
| Cocatalyst-1 Conc. (ppm) | 2000 | 8000 | 2729 | 7082 | 1400 | 1400 |
| Cocat.-2 Flow (lb/hr) | 1.27 | 1.41 | 0.72 | 0.73 | 0.91 | 0.18 |
| Cocat.-2 Conc. (ppm) | 1993 | 1800 | 3442 | 1893 | 1993 | 1993 |
| DEZ Flow (lb/hr) | 1.35 | 0 | 1.49 | 0 | 1.45 | 0 |
| DEZ Conc. (ppm) | 45000 | 0 | 30000 | 0 | 30000 | 0 |

The properties for crystalline block composites CBC 1, CBC 2, and CBC 3 are show in Table 3.

Table 3

| Example | MFR (230°C/ 2.16 kg) | Wt% PP from HTLC or TGIC Separation | Mw Kg/mol | Mw/Mn | Total Wt% C$_2$ | Tm(°C) Peak 1 (Peak 2) | Melt Enthalpy (J/g) | Crystalline Block Composite Index |
|---|---|---|---|---|---|---|---|---|
| CBC1 | 6.7 | 19.6 (HTLC) | 114 | 2.90 | 48.3 | 131 (105) | 90 | 0.579 |
| CBC2 | 10.1 | 20.3 (HTLC) | 92 | 3.50 | 48.1 | 130 (105) | 103 | 0.566 |
| CBC3 | 6.6 | 21.0 (TGIC) | 119 | 3.08 | 42.9 | 107 | 87 | 0.639 |

Polymer Characterization Methods, a discussion of the methods used may also be found in, e.g., U.S. Patent Publication Nos. 2011/0313106, 2011/0313107, and 2011/0313108.

Melt flow rate (MFR) is measured in accordance with ASTM D-1238 (230°C; 2.16 kg). The result is reported in grams/10 minutes.

Thermal Gradient Interaction Chromatography (TGIC) is preferred, e.g., as discussed in U.S. Patent Publication No. 2012/0227469.

High Temperature Liquid Chromatography (HTLC) is performed according to the methods disclosed in US Patent No. 8,076,147 and US Patent Application Publication No. 2011/152499. Samples are analyzed by the methodology described below.

A Waters GPCV2000 high temperature SEC chromatograph is reconfigured to build the HT-2DLC instrumentation. Two Shimadzu LC-20AD pumps are connected to the injector valve in GPCV2000 through a binary mixer. The first dimension (D1) HPLC column is connected between the injector and a 10-port switch valve (Valco Inc). The second dimension (D2) SEC column is connected between the 10-port valve and LS (Varian Inc.), IR (concentration and composition), RI (refractive index), and IV (intrinsic viscosity) detectors. RI and IV are built-in detector in GPCV2000. The IR5 detector is provided by PolymerChar, Valencia, Spain.

Columns: The D1 column is a high temperature Hypercarb graphite column (2.1 × 100 mm) purchased from Thermo Scientific. The D2 column is a PLRapid-H column purchased from Varian (10 × 100 mm).

Reagents: HPLC grade trichlorobenzene (TCB) is purchased from Fisher Scientific. 1-Decanol and decane are from Aldrich. 2,6-Di-*tert*-butyl-4-methylphenol (Ionol) is also purchased from Aldrich.

Sample Preparation: 0.01 - 0.15 g of polyolefin sample is placed in a 10-mL Waters autosampler vial. 7-mL of either 1-decanol or decane with 200 ppm Ionol is added to the vial afterwards. After sparging helium to the sample vial for about 1 min, the sample vial is put on a heated shaker with temperature set at 160 °C. The dissolution is done by shaking the vial at the temperature for 2 hr. The vial is then transferred to the autosampler for injection.

HT-2DLC: The D1 flow rate is at 0.01 mL/min. The composition of the mobile phase is 100% of the weak eluent (1-decanol or decane) for the first 10 min of the run. The composition is then increased to 60% of strong eluent (TCB) in 489 min. The data is collected for 489 min as the duration of the raw chromatogram. The 10-port valve switches every three minutes yielding 489/3 = 163 SEC chromatograms. A post-run gradient is used after the 489 min data acquisition time to clean and equilibrate the column for the next run:

Clean step:

1. 490 min: flow = 0.01 min; // Maintain the constant flow rate of 0.01 mL/min from 0 - 490 min.
2. 491 min: flow = 0.20 min; // Increase the flow rate to 0.20 mL/min.
3. 492 min: %B = 100; // Increase the mobile phase composition to 100% TCB
4. 502 min: % B = 100; // Wash the column using 2 mL of TCB

Equilibrium step:

5. 503 min: %B = 0; // Change the mobile phase composition to 100% of 1-decanol or decane
6. 513 min: %B = 0; // Equilibrate the column using 2 mL of weak eluent
7. 514 min: flow = 0.2 mL/min; // Maintain the constant flow of 0.2 mL/min from 491 - 514 min
8. 515 min: flow = 0.01 mL/min; // Lower the flow rate to 0.01 mL/min.

After step 8, the flow rate and mobile phase composition are the same as the initial conditions of the run gradient.

The D2 flow rate was at 2.51 mL/min. Two 60 μL loops are installed on the 10-port switch valve. 30- μL of the eluent from D1 column is loaded onto the SEC column with every switch of the valve.

The IR, LS15 (light scattering signal at 15°), LS90 (light scattering signal at 90°), and IV (intrinsic viscosity) signals are collected by EZChrom through a SS420X analogue-to-digital conversion box. The chromatograms are exported in ASCII format and imported into a home-written MATLAB software for data reduction. Using an appropriate calibration curve of polymer composition and retention volume, of polymers that are of similar nature of the hard block and soft block contained in the block composite being analyzed. Calibration polymers should be narrow in composition (both molecular weight and chemical composition) and span a reasonable molecular weight range to cover the composition of interest during the analysis. Analysis of the raw data was calculated as follows, the first dimension HPLC chromatogram was reconstructed by plotting the IR signal of every cut (from total IR SEC chromatogram of the cut) as a function of the elution volume. The IR vs. D1 elution volume was normalized by total IR signal to obtain weight fraction vs. D1 elution volume plot. The IR methyl/measure ratio was obtained from the reconstructed IR measure and IR methyl chromatograms. The ratio was converted to composition using a calibration curve of PP wt.% (by NMR) vs. methyl/measure obtained from SEC experiments. The MW was obtained from the reconstructed IR measure and LS chromatograms. The ratio was converted to MW after calibration of both IR and LS detectors using a PE standard.

Molecular weight distribution (MWD) is measured using Gel Permeation Chromatography (GPC). In particular, conventional GPC measurements are used to determine the weight-average (Mw) and number-average (Mn) molecular weight of the polymer, and to determine the MWD (which is calculated as Mw/Mn). Samples are analyzed with a high-temperature GPC instrument (Polymer Laboratories, Inc. model PL220). The method employs the well-known universal calibration method, based on the concept of hydrodynamic volume, and the calibration is performed using narrow polystyrene (PS) standards, along with four Mixed A 20μm columns (PLgel Mixed A from Agilent (formerly Polymer Laboratory Inc.)) operating at a system temperature of 140°C. Samples are prepared at a "2 mg/mL" concentration in 1,2,4-trichlorobenzene solvent. The flow rate is 1.0 mL/min, and the injection size is 100 microliters.

As discussed, the molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, (621) 1968) to derive the following equation:

$$\text{Mpolyethylene} = a * (\text{Mpolystyrene})^b.$$

In this equation, a = 0.4316 and b = 1.0 (as described in Williams and Ward, J. Polym. Sc., Polym. Let., 6, 621 (1968)). Polyethylene equivalent molecular weight calculations were performed using VISCOTEK TriSEC software Version 3.0.

$^{13}$C Nuclear Magnetic Resonance (NMR) is performed using samples that are prepared by adding approximately 2.7g of a 50/50 mixture of tetrachloroethane-d2/orthodichlorobenzene that is 0.025M in chromium acetylacetonate (relaxation agent) to 0.21g sample in a 10mm NMR tube. The samples are dissolved and homogenized by heating the tube and its contents to 150°C. The data is collected using a Bruker 400 MHz spectrometer equipped with a Bruker Dual DUL high-temperature CryoProbe. The data is acquired using 320 transients per data file, a 7.3 sec pulse repetition delay (6 sec delay + 1.3 sec acquisition time), 90 degree flip angles, and inverse gated decoupling with a sample temperature of 125°C. All measurements are made on non spinning samples in locked mode. Samples are homogenized immediately prior to insertion into the heated (130°C) NMR Sample changer, and are allowed to thermally equilibrate in the probe for 15 minutes prior to data acquisition. Comonomer content in the crystalline block composite polymers is measurable using this technique.

Differential Scanning Calorimetry (DSC) is used to measure crystallinity in the polymers. About 5 to 8 mg of polymer sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for polypropylene or "PP"). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$ / 292 J/g) x 100 (for PE)). Unless otherwise stated, melting point(s) ($T_m$) of each polymer is determined from the second heat curve (peak Tm), and the crystallization temperature ($T_c$) is determined from the first cooling curve (peak Tc).

Calculation of Composition of Crystalline Block Composite is a summation of the weight % propylene from each component in the polymer according to equation 1 results in the overall weight % propylene and/or ethylene (of the whole polymer). This mass balance equation can be used to quantify the amount of the PP and PE present in the block copolymer, as discussed below with respect to Equation 1. This mass balance equation can also be used to quantify the amount of PP and PE in a binary blend or extended to a ternary, or n-component blend. For the crystalline block composite, the overall amount of PP or PE is contained within the blocks present in the block and the unbound PP and PE polymers.

Note that the overall weight % of propylene ($C_3$) is preferably measured from $C^{13}$ NMR or some other composition measurement that represents the total amount of $C_3$ present in the whole polymer. The weight % propylene in the PP block (wt%$C_{3PP}$) is set to 100 or if otherwise known from its DSC melting point, NMR measurement, or other composition estimate, that value can be put into its place. Similarly, the weight % propylene in the PE block (wt%$C_{3PE}$) is set to 100 or if otherwise known from its DSC melting point, NMR measurement, or other composition estimate, that value can be put into its place.

Crystalline Block Composite Index (CBCI), referring to Table 3, is measured based on the method shown in Table 3A, below. In particular, CBCI provides an estimate of the quantity of block copolymer within the crystalline block composite under the assumption that the ratio of CEB to CAOB within a diblock copolymer is the same as the ratio of crystalline ethylene to crystalline alpha-olefin in the overall crystalline block composite. This assumption is valid for these statistical olefin block copolymers based on the understanding of the individual catalyst kinetics and the polymerization mechanism for the formation of the diblocks via chain shuttling catalysis as described in the specification. This CBCI analysis shows that the amount of isolated PP is less than if the polymer was a simple blend of a propylene homopolymer (in this example the CAOP) and polyethylene (in this example the CEP). Consequently, the polyethylene fraction contains an appreciable amount of propylene that would not otherwise be present if the polymer was simply a blend of polypropylene and polyethylene. To account for this "extra propylene", a mass balance calculation can be performed to estimate the CBCI from the amount of the polypropylene and polyethylene fractions and the weight percent propylene present in each of the fractions that are separated by high temperature liquid chromatography (HTLC).

Table 3A

| Line # | Variable | Source | CBC 1 | CBC 2 | CBC 3 |
|---|---|---|---|---|---|
| 1 | Overall wt% C3 Total | Measured | 51.700 | 51.900 | 57.100 |
| 2 | wt% C3 in PP block/polymer | Measured | 99.000 | 99.000 | 91.000 |
| 3 | wt% C3 in PE block/polymer | Measured | 10.500 | 10.500 | 10.000 |
| 4 | wt fraction PP (in block or polymer) | Eq. 2 below | 0.466 | 0.468 | 0.581 |
| 5 | wt fraction PE (in block or polymer) | 1-Line 4 | 0.534 | 0.532 | 0.419 |
|  | Analysis of HTLC Separation |  |  |  |  |
| 6 | wt fraction isolated PP | Measured | 0.196 | 0.203 | 0.210 |
| 7 | wt fraction PE fraction | Measured | 0.804 | 0.797 | 0.790 |
| 8 | wt% C3 in PE-fraction | Eq. 4 below | 40.169 | 39.903 | 48.100 |
| 9 | wt fraction PP-diblock in PE fraction | Eq. 6 below | 0.335 | 0.332 | 0.470 |
| 10 | wt fraction PE in PE fraction | 1-Line 10 | 0.665 | 0.668 | 0.530 |
| 11 | wt fraction Diblock in PE fraction | 10/Line 4 | 0.720 | 0.710 | 0.809 |
| 12 | Crystalline Block Composite Index (CBCI) | Eq. 7 below | 0.579 | 0.566 | 0.639 |

Referring to Table 3A, Crystalline Block Composite Index (CBCI) is measured by first determining a summation of the weight percent propylene from each component in the polymer according to Equation 1, below, which results in the overall weight percent, as discussed above with respect to the Methods for Calculation of Composition of Crystalline Block Composite. In particular, the mass balance equation is as follows:

$$\mathrm{Wt\,\%\,C3_{Overall}} = \mathrm{w_{PP}}(wt\%C3_{PP}) + \mathrm{w_{PE}}(wt\%C3_{PE}) \qquad \mathrm{Eq.\ 1}$$

where

$w_{pp}$ = weight fraction of PP in the polymer
$w_{PE}$ = weight fraction of PE in the polymer
$wt\%C3_{PP}$ = weight percent of propylene in PP component or block
$wt\%C3_{PE}$ = weight percent of propylene in PE component or block

For calculating the Ratio of PP to PE in the crystalline block composite:
Based on Equation 1, the overall weight fraction of PP present in the polymer can be calculated using Equation 2 from the mass balance of the total C3 measured in the polymer. Alternatively, it could also be estimated from a mass balance of the monomer and comonomer consumption during the polymerization. Overall, this represents the amount of PP and PE present in the polymer regardless of whether it is present in the unbound components or in the diblock copolymer. For a conventional blend, the weight fraction of PP and weight fraction of PE corresponds to the individual amount of PP and PE polymer present. For the crystalline block composite, it is assumed that the ratio of the weight fraction of PP to PE also corresponds to the average block ratio between PP and PE present in this statistical block copolymer.

$$w_{PP} = \frac{wt\%C3_{Overall} - wt\%C3_{PE}}{wt\%\,C3_{PP} - wt\%C3_{PE}} \qquad \mathrm{Eq.\ 2}$$

where

$w_{PP}$ = weight fraction of PP present in the whole polymer
$wt\%C3_{PP}$ = weight percent of propylene in PP component or block
$wt\%C3_{PE}$ = weight percent of propylene in PE component or block

To estimate the amount of the block in the Crystalline Block Composite, apply Equations 3 through 5, and the amount of the isolated PP that is measured by HTLC analysis is used to determine the amount of polypropylene present in the diblock copolymer. The amount isolated or separated first in the HTLC analysis represents the 'unbound PP' and its composition is representative of the PP hard block present in the diblock copolymer. By substituting the overall weight percent C3 of the whole polymer in the left hand side of Equation 3, and the weight fraction of PP (isolated from HTLC) and the weight fraction of PE (separated by HTLC) into the right hand side of equation 3, the weight percent of C3 in the PE fraction can be calculated using Equations 4 and 5. The PE fraction is described as the fraction separated from the unbound PP and contains the diblock and unbound PE. The composition of the isolated PP is assumed to be the same as the weight percent propylene in the iPP block as described previously.

$$\text{wt \% C3}_{\text{Overall}} = \text{w}_{\text{PPisolated}}(wt\%C3_{PP}) + \text{w}_{\text{PE-fraction}}(wt\%C3_{PE-fraction}) \qquad \text{Eq. 3}$$

$$wt\%C3_{PE-fraction} = \frac{wt\%C3_{Overall} - w_{PPisolated}(wt\%C3_{PP})}{\text{w}_{PE-fraction}} \qquad \text{Eq. 4}$$

$$w_{PE-fraction} = 1 - w_{PPisolated} \qquad \text{Eq. 5}$$

where

$w_{\text{PPisolated}}$ = weight fraction of isolated PP from HTLC
$w_{\text{PE-fraction}}$ = weight fraction of PE separated from HTLC, containing the diblock and unbound PE
$wt\%C3_{\text{PP}}$ = weight percent of propylene in the PP; which is also the same amount of propylene present in the PP block and in the unbound PP
$wt\%C3_{\text{PE-fraction}}$ = weight percent of propylene in the PE-fraction that was separated by HTLC
$wt\%C3_{\text{Overall}}$ = overall weight percent propylene in the whole polymer

The amount of wt% C3 in the polyethylene fraction from HTLC represents the amount of propylene present in the block copolymer fraction that is above the amount present in the 'unbound polyethylene'. To account for the 'additional' propylene present in the polyethylene fraction, the only way to have PP present in this fraction is for the PP polymer chain to be connected to a PE polymer chain (or else it would have been isolated with the PP fraction separated by HTLC). Thus, the PP block remains adsorbed with the PE block until the PE fraction is separated.
The amount of PP present in the diblock is calculated using Equation 6.

$$w_{PP-diblock} = \frac{wt\%C3_{PE-fraction} - wt\%C3_{PE}}{wt\% C3_{PP} - wt\%C3_{PE}} \qquad \text{Eq. 6}$$

Where

$wt\%C3_{\text{PE-fraction}}$ = weight percent of propylene in the PE-fraction that was separated by HTLC (Equation 4)
$wt\%C3_{\text{PP}}$ = weight percent of propylene in the PP component or block (defined previously)
$wt\%C3_{\text{PE}}$ = weight percent of propylene in the PE component or block (defined previously)
$w_{\text{PP-diblock}}$ = weight fraction of PP in the diblock separated with PE-fraction by HTLC

The amount of the diblock present in this PE fraction can be estimated by assuming that the ratio of the PP block to PE block is the same as the overall ratio of PP to PE present in the whole polymer. For example, if the overall ratio of PP to PE is 1:1 in the whole polymer, then it assumed that the ratio of PP to PE in the diblock is also 1:1. Thus the weight fraction of diblock present in the PE fraction would be weight fraction of PP in the diblock ($w_{\text{PP-diblock}}$) multiplied by two. Another way to calculate this is by dividing the weight fraction of PP in the diblock ($w_{\text{PP-diblock}}$) by the weight fraction of PP in the whole polymer (Equation 2).
To further estimate the amount of diblock present in the whole polymer, the estimated amount of diblock in the PE fraction is multiplied by the weight fraction of the PE fraction measured from HTLC. To estimate the crystalline block composite index, the amount of diblock copolymer is determined by Equation 7. To estimate the CBCI, the weight fraction of diblock in the PE fraction calculated using Equation 6 is divided by the overall weight fraction of PP (as calculated in equation 2) and then multiplied by the weight fraction of the PE fraction. The value of the CBCI can range from 0 to 1, wherein 1 would be equal to 100% diblock and zero would be for a material such as a traditional blend or random copolymer.

$$CBCI = \frac{w_{PP-diblock}}{w_{PP}} \cdot w_{PE-fraction} \qquad \text{Eq. 7}$$

where

$w_{PP-diblock}$ = weight fraction of PP in the diblock separated with the PE-fraction by HTLC (Equation 6)
$w_{PP}$ = weight fraction of PP in the polymer
$w_{PE-fraction}$ = weight fraction of PE separated from HTLC, containing the diblock and unbound PE (Equation 5)

For example, if an iPP-PE (i.e., isotactic polypropylene block and propylene-ethylene block) polymer contains a total of 53.3 wt% C3 and is made under the conditions to produce an PE polymer with 10 wt% C3 and an iPP polymer containing 99 wt% C3, the weight fractions of PP and PE are 0.487 to 0.514, respectively (as calculated using Equation 2).

Preparation of Films

The multilayer films were tested using the following test standards.

Haze, Clarity and Gloss:

Haze is the percentage of transmitted light scattered by the film more than 2.5° from the normal incident beam and was measured according to ASTM D 1003. Determination of the direct transmittance of the specimen has been frequently used to assess clarity. Film transmittance was measured according to ASTM D1746. Gloss is concerned not with the visibility of a body viewed through a sample, but rather with the quality of the image formed by a reflection on its surface. Gloss was measured according to ASTM D2457 at 45°.

Hot Tack

Hot tack measurements on the film were performed using an Enepay commercial testing machine according to ASTM F-1921 (Method B). Prior to testing, the samples were conditioned for a minimum of 40 hours at 23°C and 50% relative humidity (R.H.) per ASTM D-618 (Procedure A). The hot tack test simulates the filling of material into a pouch or bag before the seal has had a chance to cool completely. Sheets of dimensions 8.5" by 14" (22 cm by 36 cm) are cut from the film, with the longest dimension in the machine direction. Strips 1" (2.5 cm) wide and 14" (36 cm) long are cut from the film [samples need only be of sufficient length for clamping]. Tests are performed on these samples over a range of temperatures and the results reported as the maximum load as a function of temperature. Typical temperature steps are 5°C or 10°C with 6 replicates performed at each temperature. The Enepay machines make 0.5 inch seals. The data are reported as a hot tack curve where Average Hot Tack Force (N) is plotted as a function of temperature. The parameters used in the test are as follows:

- Specimen Width: 25.4 mm (1.0 in)
- Sealing Pressure: 0.275 N/mm$^2$
- Sealing Dwell Time: 0.5 s
- Delay time: 0.1 s
- Peel speed: 200 mm/s

Heat Seal

Heat seal measurements on the film are performed on a commercial tensile testing machine according to ASTM F-88 (Technique A). The heat seal test is a gauge of the strength of seals (seal strength) in flexible barrier materials. It does this by measuring the force required to separate a test strip of material containing the seal and identifies the mode of specimen failure. Seal strength is relevant to the opening force and package integrity. Prior to cutting, the films are conditioned for a minimum of 40 hours at 23°C ($\pm$ 2°C) and 50% ($\pm$ 5%) R.H. per ASTM D-618 (Procedure A). Sheets are then cut from the film in the machine direction to a length of approximately 11 inches (28 cm) and a width of approximately 8.5 inches (22 cm). The sheets are heat sealed across the machine direction on a Kopp Heat Sealer over a range of temperatures under the following conditions:

- Sealing Pressure: 0.275 N/mm$^2$
- Sealing Dwell Time: 0.5 s

The temperature range is approximately given by the Hot Tack Range (i.e. the temperature range over which at least a minimum hot tack seal is achieved and prior to the burn-through temperature). The sealed sheets are conditioned for a minimum of 3 hours at 23°C ($\pm$ 2°C) and 50% R.H ($\pm$ 5%) prior to cutting into one inch (2.5 cm) wide strips. These strips are then further conditioned for a minimum of 24 hours at 23° ($\pm$ 2°C) and 50% R.H ($\pm$ 5%) prior to testing. For testing, the strips are loaded into the grips of a tensile testing machine at an initial separation of 2 inches (5.1 cm) and pulled at a grip separation rate of 10 inches/min (25 cm/min) at 23°C ($\pm$ 2°C) and 50% R.H ($\pm$ 5%). The strips are tested unsupported. Six replicate tests are performed for each sealing temperature. Heat seal initiation temperature is determined as the minimum temperature at which a seal of 1.0 lb/inch or 2.6 N/15 mm is obtained.

### Examples 1-4 and Comparative Examples A - C

Inventive Examples 1-4 are each a three layer cast film having a thickness of approximately 5 mils (127 $\mu$m) prepared via co-extrusion cast film process prepared on a Dr. Collin co-extrusion cast film line equipped with three single screw extruders under the conditions reported in Table 4, based on the formulation components reported in Table 5. Layer C is the substrate layer, which is approximately 60% of total film thickness. Layer B is the tie layer, which is approximately 20% of the total thickness. Layer A is sealant layer, which is approximately 20% of the total thickness.

Comparative Examples A, B and C are two layer cast films having a thickness of approximately 5 mils (0.127 $\mu$m) prepared via co-extrusion cast film process prepared on a Dr. Collin co-extrusion cast film line equipped with three single screw extruders under the conditions reported in Table 4A, based on the formulation components reported in Table 5. Layer C is the substrate layer, which is approximately 80% of total film thickness. Layer A is sealant layer, which is approximately 20% of the total thickness.

Inventive Example 1 and Comparative Examples A, B and C were tested for their properties, and the results are reported in Figures 2 and Table 6.

Table 4 shows the process conditions for the inventive Examples 1-4. Table 4A shows process conditions of Collin cast film line for Comparative Examples A and B. Table 5 shows the layer structure of Examples 1-4 and Comp A, B, and C (each 2 mil or 50.8 $\mu$m thickness).

Table 4

| Die Total Gap, mils | 20 | | |
|---|---|---|---|
| Air Gap, in | 0.75 (0.51 mm) | | |
| Film Width, in | 8 (1.9 mm) | | |
| Film Thickness, mils | 1.2 / 2 / 5 (30 $\mu$m/51 $\mu$m/127 $\mu$m) | | |
| Total Throughput, Kg/h | 6 | | |
| | Extruder A | Extruder B | Extruder C |
| Material | PE1 (Sealant layer) | CBC1 (Tie layer) | PP1 (Substrate) |
| % Thickness, Target | 25 | 30 | 25 |
| Melt Temperature, °C | 234-238 | 234-236 | 234-237 |
| Throughput for 1.2 / 2 / 5 mil film, Kg/h | 1.0 - 1.2 | 1.0 - 1.2 | 3 |
| Screw speed, rpm | 26/ 24 / 20 | 45/40/15 | 74/45/14 |

Table 4A

| Die Total Gap, mils | 20 (0.51 $\mu$m) |
|---|---|

(continued)

| Air Gap, in | 0.75 (1.9 μm) | | |
|---|---|---|---|
| Film Width, in | 8 (20 cm) | | |
| Film Thickness, mils | 5 (127 μm) | | |
| Total Throughput, Kg/h | 6 | | |
| | Extruder A | Extruder B | Extruder C |
| Material | PE1 or ter-PP (Sealant layer) | PP1 (Substrate) | PP1 (Substrate) |
| % Thickness, Target | 25 | 30 | 25 |
| Melt Temperature, °C | 234-238 | 234-236 | 234-237 |
| Throughput for 1.2 / 2 / 5 mil film, Kg/h | 1.0 - 1.2 | 1.0 - 1.2 | 3 |
| Screw speed, rpm | 26/ 24 / 20 | 45/40/15 | 74/45/14 |

Table 5

| Example | Layer C | Layer B | Layer A | C/B/A Thickness (percentage of total thickness) |
|---|---|---|---|---|
| Inventive Example 1 | PP1 | CBC 1 | PE1 | 60/20/20 |
| Inventive Example 2 | PP1 | CBC 2 | PE2 | 60/20/20 |
| Inventive Example 3 | PP1 | CBC 2 | PE3 | 60/20/20 |
| Inventive Example 4 | PP1 | CBC 3 | PE2 | 60/20/20 |
| Comp A | PP1 | -- | PE1 | 80/0/20 |
| Comp B | PP1 | -- | ter-PP | 80/0/20 |
| Comp C | PP1 | -- | 80 wt% ter-PP + 20 wt% PBE1 | 80/0/20 |

Figure 2 compares the heat seal results for Examples 1-4 and Comparative Examples A, B and C. For example, Inventive Example 1 exhibits a plateau seal strength of 15 lb/in and a seal initiation temperature (SIT) around between 80 and 90°C. The advantage of Inventive Examples 1-4 over Comparative Examples B and Cis the relatively higher seal strength at lower temperatures, while having an improved haze relative to Comparative Example A. When PE1 is used as sealant layer without tie layer, the seal delaminates during the peel test, which results in low heat seal strength. The advantage of Inventive Ex. 1 over Comparative Examples B and C is the lower SIT. The SIT is between 80 to 90°C for Inventive Ex. 1, whereas between 100 to 110°C for Comparative Examples B and C.

Table 6 summarizes heat seal strength and haze of Examples 1 to 4 and Comparative Examples A-C. Ex. 1-4 have a plateau strength in the range of approximately 15 lb/in. The SIT for Examples 1 to 4 is below 100°C, and SIT for Ex. 1 to 2 is below 90°C. The total haze of Examples 1 to 4 is 1.7% vs Comp A-C, which show total haze of 3-7%.

Table 6

| Example | Thickness (mil) | Seal strength (lb/in) (1.0lb/in corresponds to 0.18 N/mm) | | | | | | | | Total haze (%) |
|---|---|---|---|---|---|---|---|---|---|---|
| | | 80°C | 90°C | 100°C | 110°C | 120°C | 130°C | 140°C | 150°C | |
| 1 | 5.0 | 0.03 | 5.47 | 8.66 | 9.40 | 13.78 | 15.16 | 14.99 | 14.65 | 1.7 |
| 2 | 5.0 | 0.02 | 3.31 | 6.21 | 6.02 | 13.54 | 14.59 | 17.39 | 14.76 | 1.7 |
| 3 | 5.0 | 0.03 | 0.07 | 4.05 | 6.58 | 10.36 | 16.01 | 15.38 | 14.98 | 1.7 |

(continued)

| Example | Thickness (mil) | Seal strength (lb/in) (1.0lb/in corresponds to 0.18 N/mm) | | | | | | | | Total haze (%) |
|---|---|---|---|---|---|---|---|---|---|---|
| | | 80°C | 90°C | 100°C | 110°C | 120°C | 130°C | 140°C | 150°C | |
| 4 | 5.0 | 0.03 | 0.05 | 11.94 | 14.63 | 15.81 | 15.33 | 16.02 | 16.01 | 1.6 |
| Comp A | 5.0 | 0.70 | 1.11 | 1.44 | 3.59 | 4.94 | 8.70 | 5.10 | 3.24 | 6.5 |
| Comp B | 5.0 | 0.00 | 0.00 | 0.00 | 6.49 | 16.84 | 16.82 | 17.50 | 16.96 | 3.7 |
| Comp C | 5.0 | 0.00 | 0.00 | 0.20 | 4.82 | 13.78 | 15.30 | 15.80 | 16.40 | 3.6 |

## Examples 5-8

Inventive Examples 5-8 are three layer cast films (having a thickness of approximately 1.2 mil (30.4 $\mu$m) prepared via co-extrusion cast film process on a Dr. Collin co-extrusion cast film line equipped with three single screw extruders under the conditions reported in Table 7, based on the formulation components reported in Table 8. Layer C is the substrate layer, which is approximately 60% of total film thickness. Layer B is the tie layer, which is approximately 20% of the total thickness. Layer A is sealant layer, which is approximately 20% of the total thickness.

Table 7 shows process conditions of Collin cast film line for Inventive Example 1, while Table 8 shows the layer structure of inventive examples 5 - 8. Table 9 shows the heat seal properties of the inventive examples 5 - 8, while Table 10 shows optical properties for these samples.

Table 7

| Die Total Gap, mils | 20 (0.51 $\mu$m) | | |
|---|---|---|---|
| Air Gap, in | 0.75 (1.9 $\mu$m) | | |
| Film Width, in | 8 (20 cm) | | |
| Film Thickness, mils | 1.2 (30 $\mu$m) | | |
| Total Throughput, Kg/h | 6 | | |
| | Extruder A | Extruder B | Extruder C |
| Material | PE1-PE3 (Sealant layer) | CBC2-CBC3 (Tie layer) | PP1 (Substrate) |
| % Thickness, Target | 25 | 30 | 25 |
| Melt Temperature, °C | 234-238 | 234-236 | 234-237 |
| Throughput for 1.2/2/5 mil film, Kg/h | 1.0 - 1.2 | 1.0 - 1.2 | 3 |
| Screw speed, rpm | 26/24/20 | 45/40/15 | 74/45/14 |

Table 8

| Example | Layer C | Layer B | Layer A | C/B/A Thickness (percentage of total thickness) | Film thickness (mil) |
|---|---|---|---|---|---|
| 5 | PP1 | CBC 2 | PE1 | 60/20/20 | 1.2 |
| 6 | PP1 | CBC 2 | PE2 | 60/20/20 | 1.2 |
| 7 | PP1 | CBC 2 | PE3 | 60/20/20 | 1.2 |
| 8 | PP1 | CBC 3 | PE2 | 60/20/20 | 1.2 |

The heat seal properties of Examples 5 to 8 are shown in Table 9. These inventive samples using different PE as sealant show a plateau seal strength in the range of 3.5 to 5.2 lb/in. The SIT for Examples 5 to 8 is below 100°C, and Examples 5 to 6 are below 90°C.

Table 9

| Example | Thickness (mil) | Seal strength (lb/in) (1.0 lb/in corresponds to 0.18 N/mm) | | | | | | | |
|---|---|---|---|---|---|---|---|---|---|
| | | 80°C | 90°C | 100°C | 110°C | 120°C | 130°C | 140°C | 150°C |
| 5 | 1.2 | 0.29 | 2.52 | 2.43 | 3.84 | 4.76 | 4.20 | 4.38 | 5.23 |
| 6 | 1.2 | 0.07 | 1.84 | 2.69 | 4.06 | 4.93 | 5.11 | 5.06 | 4.35 |
| 7 | 1.2 | | 0.22 | 2.58 | 2.79 | 3.52 | 4.25 | 3.53 | 3.72 |
| 8 | 1.2 | | 0.02 | 3.94 | 4.14 | 4.16 | 5.09 | 4.41 | 4.69 |

Table 10 below shows the optical properties of Ex. 5-8. The clarity of Ex. 5-8 is around 97% and total haze around 0.6 to 0.9%.

Table 10

| Example | Thickness (mil) | Clarity (%) | 45° Gloss (%) | Total haze (%) |
|---|---|---|---|---|
| 5 | 1.2 | 97.5 | 91.0 | 0.6 |
| 6 | 1.2 | 97.2 | 91.5 | 0.6 |
| 7 | 1.2 | 96.3 | 89.5 | 0.9 |
| 8 | 1.2 | 97.2 | 91.7 | 0.6 |

## Examples 9 and D

Inventive Example 9 is a three layer cast films having a thickness of approximately 2 mils (50.8 $\mu$m) prepared via co-extrusion cast film process an Egan co-ex cast film line (Margot Machinery, Inc.) equipped with three single screw extruders and conditions detail in Table 11, based on the formulation components reported in Table 12. Layer C is the substrate layer, which is approximately 60% of total film thickness. The layer C is a multilayer substrate comprising three layers (layers C, D and E). Layer B is the tie layer, which is approximately 10% of the total thickness. Layer A is sealant layer, which is approximately 20% of the total thickness.

Comparative Example D is a two layer cast films having a thickness of approximately 2 mils prepared via co-extrusion cast film process an Egan co-ex cast film line (Margot Machinery, Inc.) equipped with three single screw extruders and conditions detail in Table 11A, based on the formulation components reported in Table 12. Layer C is the substrate layer, which is approximately 80% of total film thickness. Layer A is sealant layer, which is approximately 20% of the total thickness.

The cast films are laminated to PET using an Egan Pilot Laminator using a solvent based lamination. Prior to lamination, corona treatment is performed on the sealant side, bringing the surface tension up to 42 dynes. The adhesive used are Adcote 577A (70% solids) and Adcote 577B (71% solids). Adcote 577A and Adcote 577B after supplied by The Dow Chemical Company. The adhesive system was diluted down to 32 wt% solids with Ethyl Acetate.

Table 13 compares the optical properties of Example 9 and comparative Example D. The clarity of the inventive Example 9 is slightly higher than comparative Example D and the haze of Example 9 is slightly lower than comparative Example D. Overall, both examples have high clarity and low haze.

As shown in Table 14, the heat seal property of inventive Example 9 after lamination shows lower SIT (<90°C) as compared to comparative Example D.

Table 11

| Die Total Gap, mils | 36 (0.91 mm) | | | | |
|---|---|---|---|---|---|
| Film Width, in | 23 (58 cm) | | | | |
| Film Thickness, mils | 2 (51 $\mu$m) | | | | |
| Total Throughput, Kg/h | 160 - 164 | | | | |
| | Extruder A | Extruder B | Extruder C | Extruder D | Extruder E |
| Material | PE3 (Sealant layer) | Tie layer | PP2 (Substrate layer) | | |
| % Thickness, Target | 20% | 10% | 24% | 23% | 23% |

(continued)

|  | Extruder A | Extruder B | Extruder C | Extruder D | Extruder E |
|---|---|---|---|---|---|
| Material | PE3 (Sealant layer) | Tie layer | PP2 (Substrate layer) | | |
| Melt Temperature, °C | 237-239 | 232-233 | 226-228 | 214-220 | 228-231 |
| Throughput, Kg/h | 30 - 32 | 17 - 18 | 37 - 38 | 37 - 38 | 35 - 36 |
| Screw speed, rpm | 50 - 53 | 18 - 20 | 46 - 48 | 46 - 47 | 46 - 48 |

Table 11A shows process conditions of Egan cast film line for Comparative Example D.

Table 11A

| Die Total Gap, mils | 36 (0.91 mm) | | | | |
|---|---|---|---|---|---|
| Film Width, in | 23 (58 cm) | | | | |
| Film Thickness, mils | 2 (51 μm) | | | | |
| Total Throughput, Kg/h | 160 - 164 | | | | |
|  | Extruder A | Extruder B | Extruder C | Extruder D | Extruder E |
| Material | Ter-PP (Sealant layer) | PP2 (Substrate layer) | PP2 (Substrate layer) | | |
| % Thickness, Target | 20% | 10% | 24% | 23% | 23% |
| Melt Temperature, °C | 237-239 | 232-233 | 226-228 | 214-220 | 228-231 |
| Throughput, Kg/h | 30 - 32 | 17 - 18 | 37-38 | 37 - 38 | 35 - 36 |
| Screw speed, rpm | 50 - 53 | 18 - 20 | 46 - 48 | 46 - 47 | 46 - 48 |

Table 12 shows the layer structure of Examples 10 and comparative Example D.

Table 12

| Example | Layer C | Layer B | Layer A | C/B/A Thickness (percentage of total thickness) | Film thickness (mil) |
|---|---|---|---|---|---|
| 9 | PP2 | 80 wt% CBC 2 + 20 wt% PBE1 | PE1 | 70/10/20 | 2 |
| D | PP2 | | Ter-PP | 80/0/20 | 2 |

Table 13 shows the optical properties of Example 9 and comparative Example D before lamination.

Table 13

| Example | Thickness (mil) | Clarity (%) | 45 Gloss (%) | Total haze (%) |
|---|---|---|---|---|
| 9 | 2 | 99.0 | 89.3 | 0.8 |
| D | 2 | 97.9 | 86.9 | 1.7 |

Table 14 shows the heat seal property of Examples 9 and D after lamination.

Table 14

| Example | Thickness (mil) | Seal strength (lb/in) (1.0 lb/in corresponds to 0.18 N/mm) | | | | | | | |
|---|---|---|---|---|---|---|---|---|---|
|  |  | 80°C | 90°C | 100°C | 110°C | 120°C | 130°C | 140°C | 150°C |
| 9 | 2 | 0.00 | 2.94 | 5.25 | 5.51 | 8.45 | 9.93 | 11.97 | 12.77 |
| D | 2 |  |  | 0.15 | 1.88 | 2.88 | 13.97 | 15.13 | 15.15 |

**Examples E-F**

Comparative Examples E and F are three layer cast films (having a thickness of approximately 2 mils (50.8 μm)) prepared via co-extrusion cast film process on a Dr. Collin co-ex cast film line equipped with three single screw extruders under the conditions reported in Table 15, based on the formulation components reported in Table 16. Layer C is the substrate layer, which is approximately 60% of total film thickness. Layer B is the tie layer, which is approximately 20% of the total thickness. Layer A is sealant layer, which is approximately 20% of the total thickness.

The heat seal properties of Comparative Examples E and F are shown in Table 17. The 2 mil thick film samples using terpolymer-PP as sealant show a plateau seal strength in the range of 6.4 to 8.0 lb/in, and no delamination is observed during the peel test. However, the SIT is >100°C.

Table 15 shows process conditions of Collin cast film line for Comparative Examples E and F.

Table 15

| Die Total Gap, mils | 20 (0.51mm) | | |
|---|---|---|---|
| Air Gap, in | 0.75 (1.9 cm) | | |
| Film Width, in | 8 (20 cm) | | |
| Film Thickness, mils | 2 (51 μm) | | |
| Total Throughput, Kg/h | 6 | | |
| | Extruder A | Extruder B | Extruder C |
| Material | Ter-PP (Sealant layer) | CBC2-CBC3 (Tie layer) | PP2 (Substrate) |
| L/D | 25 | 30 | 25 |
| Melt Temperature, °C | 234-238 | 234-236 | 234-237 |
| Throughput for 1.2 / 2 / 5 mil film, Kg/h | 1.0 - 1.2 | 1.0 - 1.2 | 3 |
| Screw speed, rpm | 26/ 24 / 20 | 45 / 40 / 15 | 74 / 45 / 14 |

Table 16 shows the layer structure of Examples E and F.

Table 16

| Example | Layer C | Layer B | Layer A | C/B/A Thickness ratio | Film thickness (mil) |
|---|---|---|---|---|---|
| E | PP2 | CBC 2 | Ter-PP | 60/20/20 | 2 |
| F | PP2 | CBC 3 | Ter-PP | 60/20/20 | 2 |

Table 17 shows heat seal properties of Examples E and F.

Table 17

| Example | Thickness (mil) | Seal strength (lb/in) (1.0lb/in corresponds to 0.18 N/mm) | | | | | | | |
|---|---|---|---|---|---|---|---|---|---|
| | | 80°C | 90°C | 100°C | 110°C | 120°C | 130°C | 140°C | 150°C |
| E | 2 | 0.02 | 0.02 | 0.26 | 6.86 | 7.51 | 7.91 | 7.74 | 7.97 |
| F | 2 | 0.02 | 0.02 | 0.34 | 6.35 | 7.09 | 6.86 | 7.39 | 7.10 |

From the forgoing examples, it may be seen that the inventive samples display high plateau heat seal strength, preferably greater than 3.5 lb/in (9.2 N/15mm) for a total film thickness of 30 μm, 5.7 lb/in (15 N/15mm) for a total film thickness of 50 μm and 10 lb/in (26.3 N/15mm) for a total film thickness of 125μm. After lamination, the seal strength of laminated film is preferably greater than 8 lb/in (21.0 N/15mm), and more preferably greater than 10 lb/in (26.3 N/15mm). The preferred films of the present invention also exhibit low heat initiation temperature, specifically less than or equal to 100°C. The inventive films also show clarity (transparency) that is greater than those of the comparative samples. The inventive samples show a transparency of greater than 80%, specifically greater than 85%, and more specifically greater than 90%. The inventive samples also show a haze less than 1% when total film thickness is less than or equal to 50 μm.

**Claims**

1. A multilayer film comprising:

   a first layer that comprises polyethylene and a second layer that comprises polypropylene; and
   a tie layer; where the tie layer comprises a crystalline block composite and where the tie layer is disposed between the first layer and the second layer; the first layer being disposed on a first surface of the tie layer; the second layer being disposed on a second surface of the tie layer; where the second surface is opposedly disposed to the first surface; where the crystalline block composite comprises a crystalline ethylene based polymer, a crystalline alpha-olefin based polymer and a block copolymer comprising a crystalline ethylene block and a crystalline alpha-olefin block; where the multilayer film has a total thickness of 20 to 130 micrometers.

2. The multilayer film of Claim 1, where the crystalline block composite has a melt flow ratio 0.1 to 30 g/10 min, when measured as per ASTM D 1238 at 230°C and 2.16 kilograms.

3. The multilayer film of Claim 1, where the crystalline block composite comprises 5 to 95 weight percent crystalline ethylene blocks and 95 to 5 wt percent crystalline alpha-olefin blocks.

4. The multilayer film of Claim 1, where the crystalline block composite has a Crystalline Block Composite Index 0.3 to up to 1.0, determined with a method as disclosed in the description.

5. The multilayer film of claim 1, where the tie layer further comprises an elastomer; and where the elastomer is a homogeneously branched ethylene-α-olefin copolymer, a polyolefin elastomer, a vinyl aromatic block copolymer, or a combination comprising at least one of the foregoing elastomers.

6. The multilayer film of claim 1, wherein the polypropylene of the second layer is a polypropylene homopolymer.

7. The multilayer film of claim 6, where the polyethylene is selected from ultralow density polyethylene, low density polyethylene, linear low density polyethylene, medium density polyethylene, high density polyethylene, high melt strength high density polyethylene, ultrahigh density polyethylene, or combinations thereof.

8. The multilayer film of claim 6, where the polyethylene comprises linear low density polyethylene.

9. The multilayer film of claim 1, where the polypropylene is selected from random copolymer polypropylene, impact copolymer polypropylene, high impact polypropylene, high melt strength polypropylene, isotactic polypropylene, syndiotactic polypropylene, or a combination comprising at least one of the foregoing polypropylenes.

10. The multilayer film of claim 1, where the first layer has a thickness of 5 to 30%, the tie layer has a thickness of 1 to 20% and the second layer has a thickness of 50 to 94%, based on the total thickness of the multilayer film.

11. The multilayer film of claim 1, where the multilayer film has a plateau heat seal strength greater than 3.5 lb/in (9.2 N/15mm) for a total film thickness of 30 μm, 5.7 lb/in (15 N/15mm) for a total film thickness of 50 μm and 10 lb/in (26.3 N/15mm) for a total film thickness of 125 μm, when the plateau heat seal strength is measured as per ASTM F-88 (Technique A).

12. The multilayer film of claim 1, where the multilayer film has a plateau seal strength greater than 8 lb/in (21.0 N/15mm) after lamination, when the plateau seal strength is measured as per ASTM F-88 (Technique A).

13. The multilayer film of claim 1, where the multilayer film has a heat initiation temperature less than or equal to 100°C, where the heat initiation temperature is determined as the minimum temperature at which a seal of 1.0 lb/inch or 2.6 N/15 mm is obtained.

14. The multilayer film of claim 1, where the multilayer film has a transparency of greater than 80% when tested as per ASTM D1746, and a haze of less than 3%, when tested as per ASTM D 1003.

**15.** An article comprising the multilayer film of claim 1.

**16.** A method of manufacturing a multilayer film comprising:

coextruding a multilayer film comprising:

a first layer that comprises polyethylene and a second layer that comprises polypropylene; and
a tie layer; where the tie layer comprises a crystalline block composite and where the tie layer is disposed between the first layer and the second layer; the first layer being disposed on a first surface of the tie layer; the second layer being disposed on a second surface of the tie layer; where the second surface is opposedly disposed to the first surface; where the crystalline block composite comprises a crystalline ethylene based polymer, a crystalline alpha-olefin based polymer and a block copolymer comprising a crystalline ethylene block and a crystalline alpha-olefin block; and

blowing or casting the multilayer film; where the multilayer film has a total thickness of 20 to 130 micrometers.

**17.** The method of claim 16, further comprising laminating the multilayer film in a roll mill or a laminator.

**Patentansprüche**

**1.** Eine mehrschichtige Folie, beinhaltend:

eine erste Schicht, die Polyethylen beinhaltet, und eine zweite Schicht, die Polypropylen beinhaltet; und
eine Verbindungsschicht; wobei die Verbindungsschicht einen kristallinen Blockverbundstoff beinhaltet und wobei die Verbindungsschicht zwischen der ersten Schicht und der zweiten Schicht angeordnet ist; die erste Schicht auf einer ersten Oberfläche der Verbindungsschicht angeordnet ist; die zweite Schicht auf einer zweiten Oberfläche der Verbindungsschicht angeordnet ist; wobei die zweite Oberfläche der ersten Oberfläche gegenüberliegend angeordnet ist; wobei der kristalline Blockverbundstoff ein kristallines ethylenbasiertes Polymer, ein kristallines alpha-olefinbasiertes Polymer und ein Blockcopolymer, beinhaltend einen kristallinen Ethylenblock und einen kristallinen Alpha-Olefinblock, beinhaltet; wobei die mehrschichtige Folie eine Gesamtdicke von 20 bis 130 Mikrometer aufweist.

**2.** Mehrschichtige Folie gemäß Anspruch 1, wobei der kristalline Blockverbundstoff ein Schmelzflussverhältnis von 0,1 bis 30 g/10 Min aufweist, wenn nach ASTM D 1238 bei 230°C und 2,16 Kilogramm gemessen.

**3.** Mehrschichtige Folie gemäß Anspruch 1, wobei der kristalline Blockverbundstoff zu 5 bis 95 Gewichtsprozent kristalline Ethylenblöcke und zu 95 bis 5 Gew.-Prozent kristalline Alpha-Olefinblöcke beinhaltet.

**4.** Mehrschichtige Folie gemäß Anspruch 1, wobei der kristalline Blockverbundstoff einen Kristalliner-Blockverbundstoff-Index von 0,3 bis zu 1,0 aufweist, bestimmt mit einem wie in der Beschreibung offenbarten Verfahren.

**5.** Mehrschichtige Folie gemäß Anspruch 1, wobei die Verbindungsschicht ferner ein Elastomer beinhaltet; und wobei das Elastomer ein homogen verzweigtes Ethylen-$\alpha$-Olefin-Copolymer, ein Polyolefinelastomer, ein vinylaromatisches Blockcopolymer oder eine Kombination, beinhaltend mindestens eins der vorangehenden Elastomere, ist.

**6.** Mehrschichtige Folie gemäß Anspruch 1, wobei das Polypropylen der zweiten Schicht ein Polypropylenhomopolymer ist.

**7.** Mehrschichtige Folie gemäß Anspruch 6, wobei das Polyethylen ausgewählt ist aus Polyethylen ultraniedriger Dichte, Polyethylen niedriger Dichte, linearem Polyethylen niedriger Dichte, Polyethylen mittlerer Dichte, Polyethylen hoher Dichte, hochschmelzfestem Polyethylen hoher Dichte, Polyethylen ultrahoher Dichte oder Kombinationen davon.

**8.** Mehrschichtige Folie gemäß Anspruch 6, wobei das Polyethylen lineares Polyethylen niedriger Dichte beinhaltet.

**9.** Mehrschichtige Folie gemäß Anspruch 1, wobei das Polypropylen ausgewählt ist aus statistischem Copolymer-Polypropylen, schlagzähem Copolymer-Polypropylen, hochschlagzähem Polypropylen, hochschmelzfestem Polypropylen, isotaktischem Polypropylen, syndiotaktischem Polypropylen oder einer Kombination, beinhaltend mindestens eins der vorangehenden Polypropylene.

10. Mehrschichtige Folie gemäß Anspruch 1, wobei, bezogen auf die Gesamtdicke der mehrschichtigen Folie, die erste Schicht eine Dicke von 5 bis 30 % aufweist, die Verbindungsschicht eine Dicke von 1 bis 20 % aufweist und die zweite Schicht eine Dicke von 50 bis 94 % aufweist.

11. Mehrschichtige Folie gemäß Anspruch 1, wobei die mehrschichtige Folie eine Plateau-Heißsiegelfestigkeit von mehr als 3,5 lb/in (9,2 N/15 mm) für eine Gesamtfoliendicke von 30 $\mu$m, 5,7 lb/in (15 N/15 mm) für eine Gesamtfoliendicke von 50 $\mu$m und 10 lb/in (26,3 N/15 mm) für eine Gesamtfoliendicke von 125 $\mu$m aufweist, wenn die Plateau-Heißsiegelfestigkeit nach ASTM F-88 (Technik A) gemessen wird.

12. Mehrschichtige Folie gemäß Anspruch 1, wobei die mehrschichtige Folie nach Laminierung eine Plateau-Heißsiegelfestigkeit von mehr als 8 lb/in (21,0 N/15 mm) aufweist, wenn die Plateau-Heißsiegelfestigkeit nach ASTM F-88 (Technik A) gemessen wird.

13. Mehrschichtige Folie gemäß Anspruch 1, wobei die mehrschichtige Folie eine Wärmeinitiierungstemperatur von weniger als oder gleich 100°C aufweist, wobei die Wärmeinitiierungstemperatur bestimmt wird als die Mindesttemperatur, bei der eine Versiegelung von 1,0 lb/Zoll oder 2,6 N/15 mm erhalten wird.

14. Mehrschichtige Folie gemäß Anspruch 1, wobei die mehrschichtige Folie eine Transparenz von mehr als 80 % aufweist, wenn nach ASTM D1746 geprüft, und eine Trübung von weniger als 3 %, wenn nach ASTM D 1003 geprüft.

15. Ein Artikel, beinhaltend die mehrschichtige Folie gemäß Anspruch 1.

16. Ein Verfahren zum Herstellen einer mehrschichtigen Folie, beinhaltend:
Coextrudieren einer mehrschichtigen Folie, beinhaltend:

eine erste Schicht, die Polyethylen beinhaltet, und eine zweite Schicht, die Polypropylen beinhaltet; und eine Verbindungsschicht; wobei die Verbindungsschicht einen kristallinen Blockverbundstoff beinhaltet und wobei die Verbindungsschicht zwischen der ersten Schicht und der zweiten Schicht angeordnet ist; die erste Schicht auf einer ersten Oberfläche der Verbindungsschicht angeordnet ist; die zweite Schicht auf einer zweiten Oberfläche der Verbindungsschicht angeordnet ist; wobei die zweite Oberfläche der ersten Oberfläche gegenüberliegend angeordnet ist; wobei der kristalline Blockverbundstoff ein kristallines ethylenbasiertes Polymer, ein kristallines alpha-olefinbasiertes Polymer und ein Blockcopolymer, beinhaltend einen kristallinen Ethylenblock und einen kristallinen Alpha-Olefinblock, beinhaltet; und
Blasen oder Gießen der mehrschichtigen Folie; wobei die mehrschichtige Folie eine Gesamtdicke von 20 bis 130 Mikrometer aufweist.

17. Verfahren gemäß Anspruch 16, ferner beinhaltend das Laminieren der mehrschichtigen Folie in einer Walzmühle oder einem Laminator.

## Revendications

1. Un film multicouche comprenant :

une première couche qui comprend du polyéthylène et une deuxième couche qui comprend du polypropylène ; et une couche de liaison ; où la couche de liaison comprend un composite à blocs cristallins et où la couche de liaison est disposée entre la première couche et la deuxième couche ; la première couche étant disposée sur une première surface de la couche de liaison ; la deuxième couche étant disposée sur une deuxième surface de la couche de liaison ; où la deuxième surface est disposée à l'opposé de la première surface ; où le composite à blocs cristallins comprend un polymère à base d'éthylène cristallin, un polymère à base d'alpha-oléfine cristalline et un copolymère à blocs comprenant un bloc d'éthylène cristallin et un bloc d'alpha-oléfine cristalline ; où le film multicouche a une épaisseur totale de 20 à 130 micromètres.

2. Le film multicouche de la revendication 1, où le composite à blocs cristallins a un rapport de fluidité à l'état fondu de 0,1 à 30 g/10 min, lorsqu'il est mesuré selon l'ASTM D 1238 à 230 °C et 2,16 kilogrammes.

3. Le film multicouche de la revendication 1, où le composite à blocs cristallins comprend de 5 à 95 pour cent en poids de blocs d'éthylène cristallin et de 95 à 5 pour cent en poids de blocs d'alpha-oléfine cristalline.

4. Le film multicouche de la revendication 1, où le composite à blocs cristallins a un Indice de Composite à Blocs Cristallins allant de 0,3 jusqu'à 1,0, déterminé avec une méthode telle que divulguée dans la description.

5. Le film multicouche de la revendication 1, où la couche de liaison comprend en outre un élastomère ; et où l'élastomère est un copolymère d'éthylène-α-oléfine ramifié de manière homogène, un élastomère de polyoléfine, un copolymère à blocs vinylaromatiques, ou une combinaison comprenant au moins l'un des élastomères précédents.

6. Le film multicouche de la revendication 1, dans lequel le polypropylène de la deuxième couche est un homopolymère de polypropylène.

7. Le film multicouche de la revendication 6, où le polyéthylène est sélectionné parmi un polyéthylène ultrabasse densité, un polyéthylène basse densité, un polyéthylène basse densité linéaire, un polyéthylène moyenne densité, un polyéthylène haute densité, un polyéthylène haute densité hautement résistant à l'état fondu, un polyéthylène ultrahaute densité, ou des combinaisons de ceux-ci.

8. Le film multicouche de la revendication 6, où le polyéthylène comprend un polyéthylène basse densité linéaire.

9. Le film multicouche de la revendication 1, où le polypropylène est sélectionné parmi un polypropylène de copolymère aléatoire, un polypropylène de copolymère résistant aux chocs, un polypropylène hautement résistant aux chocs, un polypropylène hautement résistant à l'état fondu, un polypropylène isotactique, un polypropylène syndiotactique, ou une combinaison comprenant au moins l'un des polypropylènes précédents.

10. Le film multicouche de la revendication 1, où la première couche a une épaisseur de 5 à 30 %, la couche de liaison a une épaisseur de 1 à 20 % et la deuxième couche a une épaisseur de 50 à 94 %, rapporté à l'épaisseur totale du film multicouche.

11. Le film multicouche de la revendication 1, où le film multicouche a une résistance de thermoscellage de plateau supérieure à 3,5 livres/pouce (9,2 N/15 mm) pour une épaisseur totale de film de 30 $\mu$m, 5,7 livres/pouce (15 N/15 mm) pour une épaisseur totale de film de 50 $\mu$m et 10 livres/pouce (26,3 N/15 mm) pour une épaisseur totale de film de 125 $\mu$m, lorsque la résistance de thermoscellage de plateau est mesurée selon l'ASTM F-88 (Technique A).

12. Le film multicouche de la revendication 1, où le film multicouche a une résistance de scellage de plateau supérieure à 8 livres/pouce (21,0 N/15 mm) après stratification, lorsque la résistance de scellage de plateau est mesurée selon l'ASTM F-88 (Technique A).

13. Le film multicouche de la revendication 1, où le film multicouche a une température d'amorçage à la chaleur inférieure ou égale à 100 °C, où la température d'amorçage à la chaleur est déterminée comme la température minimale à laquelle un scellement de 1,0 livre/pouce ou 2,6 N/15 mm est obtenu.

14. Le film multicouche de la revendication 1, où le film multicouche a une transparence de plus de 80 % lorsqu'elle est testée selon l'ASTM D1746, et un trouble de moins de 3 %, lorsqu'il est testé selon l'ASTM D 1003.

15. Un article comprenant le film multicouche de la revendication 1.

16. Un procédé de fabrication d'un film multicouche comprenant :

la coextrusion d'un film multicouche comprenant :

une première couche qui comprend du polyéthylène et une deuxième couche qui comprend du polypropylène ; et
une couche de liaison ; où la couche de liaison comprend un composite à blocs cristallins et où la couche de liaison est disposée entre la première couche et la deuxième couche ; la première couche étant disposée sur une première surface de la couche de liaison ; la deuxième couche étant disposée sur une deuxième surface de la couche de liaison ; où la deuxième surface est disposée à l'opposé de la première surface ; où le composite à blocs cristallins comprend un polymère à base d'éthylène cristallin, un polymère à base d'alpha-oléfine cristalline et un copolymère à blocs comprenant un bloc d'éthylène cristallin et un bloc d'alpha-oléfine cristalline ; et

le soufflage ou le coulage du film multicouche ; où le film multicouche a une épaisseur totale de 20 à 130 micromètres.

17. Le procédé de la revendication 16, comprenant en outre la stratification du film multicouche dans un laminoir ou une machine à stratifier.

**FIG. 1**

**FIG. 2**

**EP 3 107 727 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013003541 A
- US 5783638 A
- US 20110313106
- US 20110313107 A
- US 20110313108 A
- US 5504172 A
- WO 0001745 A
- US 7199203 B
- US 6960635 B
- US 6525157 B
- US 5272236 A
- US 5278272 A
- US 5582923 A
- US 5733155 A
- US 3645992 A
- US 4076698 A
- US 3914342 A
- US 5854045 A
- US 5919983 A
- US 20110313106 A
- US 20120227469 A
- US 8076147 B
- US 2011152499

**Non-patent literature cited in the description**

- *Modern Plastics Encyclopedia/89,* October 1988, vol. 65 (11), 86-92
- **WILLIAMS ; WARD.** *Journal of Polymer Science, Polymer Letters,* 1968, vol. 6 (621
- **WILLIAMS ; WARD.** *J. Polym. Sc., Polym. Let.,* 1968, vol. 6, 621